# EUROPEAN PATENT APPLICATION

(11) **EP 4 231 733 A1**
(43) Date of publication of application: **23.08.2023**
(21) Application number: 21880047.2
(22) Date of filing: 11.10.2021
(51) Int. Cl.: H04W 64/00, H04W 92/14, H04W 88/04

(54) **COMMUNICATION SYSTEM**

(30) Priority: 13.10.2020 JP 2020172714
(71) Applicant: MITSUBISHI ELECTRIC CORPORATION, Chiyoda-ku Tokyo 100-8310 (JP)
(72) Inventor: SHIMODA, Tadahiro, Tokyo 100-8310 (JP); MOCHIZUKI, Mitsuru, Tokyo 100-8310 (JP); NAKAZAWA, Masayuki, Tokyo 100-8310 (JP); IWAYAMA, Naofumi, Tokyo 100-8310 (JP)
(74) Representative: Meissner Bolte Partnerschaft mbB
(86) International application number: PCT/JP2021/037552
(87) International publication number: WO 2022/080308

(57) **Abstract**

A communication system includes a base station and a communication terminal (UE) connected to the base station. The base station transmits a result of reception of an uplink positioning signal transmitted by the communication terminal and location information of the base station to a positioning device that is a device having a positioning function of deriving a location of the communication terminal, and the communication terminal transmits a result of reception of a downlink positioning signal transmitted by the base station to the positioning device.

## Description

### Field

The present disclosure relates to a radio communication technology.

### Background

The 3rd Generation Partnership Project (3GPP), which is a standard organization of mobile communication systems, has been studying a communication system called long term evolution (LTE) for radio sections and called system architecture evolution (SAE) for an entire system configuration including a core network and a radio access network (hereinafter, also collectively referred to as a network) (for example, Non Patent Literatures 1 to 5). The communication system is also referred to as a 3.9 generation (3.9 G) system.

As an access scheme of LTE, orthogonal frequency division multiplexing (OFDM) is used in a downlink direction, and single carrier frequency division multiple access (SC-FDMA) is used in an uplink direction. In addition, unlike wideband code division multiple access (W-CDMA), LTE does not provide circuit switching and provides only a packet communication system.

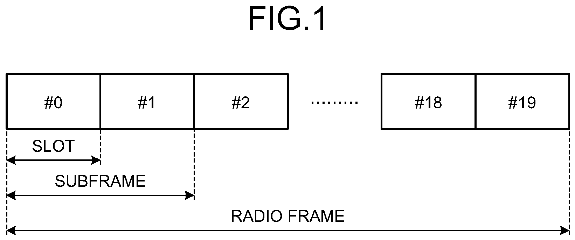

Decisions by 3GPP regarding a frame configuration in an LTE system described in Non Patent Literature 1 (Chapter 5) will be described with reference to FIG. 1. FIG. 1 is an explanatory diagram illustrating a configuration of a radio frame used in an LTE communication system. In FIG. 1, one radio frame is 10 ms. The radio frame is divided into 10 equally sized subframes. The subframe is divided into two equally sized slots. Downlink synchronization signals are included in first and sixth subframes in each radio frame. The synchronization signals are classified into a primary synchronization signal (P-SS) and a secondary synchronization signal (S-SS).

Decisions by 3GPP regarding a channel configuration in the LTE system are described in Non Patent Literature 1 (Chapter 5). It is assumed that also in a closed subscriber group (CSG) cell, the same channel configuration as that of a non-CSG cell is used.

A physical broadcast channel (PBCH) is a channel for downlink transmission from a base station device (hereinafter, sometimes simply referred to as a "base station") to a communication terminal device (hereinafter, sometimes simply referred to as a "communication terminal") such as a user equipment device (hereinafter, sometimes simply referred to as "user equipment"). A BCH transport block is mapped to four subframes in a 40-ms interval. There is no explicit signaling of 40-ms timing.

A physical control format indicator channel (PCFICH) is a channel for downlink transmission from a base station to a communication terminal. The PCFICH notifies the number of orthogonal frequency division multiplexing (OFDM) symbols used for PDCCHs from the base station to the communication terminal. The PCFICH is transmitted on a per subframe basis.

A physical downlink control channel (PDCCH) is a channel for downlink transmission from a base station to a communication terminal. The PDCCH provides resource allocation information of a downlink shared channel (DL-SCH) which is one of transport channels to be described later, resource allocation information of a paging channel (PCH) which is one of the transport channels to be described later, and hybrid automatic repeat request (HARQ) information about the DL-SCH. The PDCCH carries an uplink scheduling grant. The PDCCH carries acknowledgement (Ack)/negative acknowledgement (Nack) which is a response signal to uplink transmission. The PDCCH is also referred to as an L1/L2 control signal.

A physical downlink shared channel (PDSCH) is a channel for downlink transmission from a base station to a communication terminal. The downlink shared channel (DL-SCH) which is a transport channel and the PCH which is a transport channel are mapped to the PDSCH.

A physical multicast channel (PMCH) is a channel for downlink transmission from a base station to a communication terminal. A multicast channel (MCH) which is a transport channel is mapped to the PMCH.

A physical uplink control channel (PUCCH) is a channel for uplink transmission from a communication terminal to a base station. The PUCCH carries Ack/Nack which is a response signal to downlink transmission. The PUCCH carries channel state information (CSI). The CSI includes a rank indicator (RI), a precoding matrix indicator (PMI), and a channel quality indicator (CQI) report. The RI is rank information of a channel matrix in MIMO. The PMI is information on a precoding weight matrix used in MIMO. The CQI is quality information indicating quality of received data or channel quality. In addition, the PUCCH carries a scheduling request (SR).

A physical uplink shared channel (PUSCH) is a channel for uplink transmission from a communication terminal to a base station. An uplink shared channel (UL-SCH) which is one of the transport channels is mapped to the PUSCH.

A physical hybrid ARQ (HARQ) indicator channel (PHICH) is a channel for downlink transmission from a base station to a communication terminal. The PHICH carries Ack/Nack which is a response signal to uplink transmission. A physical random access channel (PRACH) is a channel for uplink transmission from a communication terminal to a base station. The PRACH carries a random access preamble.

A downlink reference signal (RS) is a symbol known in the LTE communication system. The following five types of downlink reference signals are defined. The signals are cell-specific reference signal (CRS), an MBSFN reference signal, a data demodulation reference signal (DM-RS) which is a UE-specific reference signal, a positioning reference signal (PRS), and a channel state information reference signal (CSI-RS). As a measurement of a physical layer of a communication terminal, there is a measurement of reference signal received power (RSRP).

Similarly, an uplink reference signal is a symbol known in the LTE communication system. The following two types of uplink reference signals are defined. The signals are a data demodulation reference signal (DM-RS) and a sounding reference signal (SRS).

Transport channels described in Non Patent Literature 1 (Chapter 5) will be described. Among downlink transport channels, a broadcast channel (BCH) is broadcast in the entire coverage area of the base station (cell). The BCH is mapped to the physical broadcast channel (PBCH).

Retransmission control by hybrid ARQ (HARQ) is applied to the downlink shared channel (DL-SCH). The DL-SCH can be broadcast in the entire coverage area of the base station (cell). The DL-SCH supports dynamic or semi-static resource allocation. The semi-static resource allocation is also referred to as persistent scheduling. The DL-SCH supports discontinuous reception (DRX) of a communication terminal in order to reduce power consumption of the communication terminal. The DL-SCH is mapped to the physical downlink shared channel (PDSCH).

The paging channel (PCH) supports DRX of a communication terminal in order to enable the communication terminal to reduce power consumption. The PCH is required to be broadcast in the entire coverage area of the base station (cell). The PCH is mapped to a physical resource such as the physical downlink shared channel (PDSCH) that can be dynamically used for traffic.

A multicast channel (MCH) is used for broadcast in the entire coverage area of the base station (cell). The MCH supports SFN combining of multimedia broadcast multicast service (MBMS) services (MTCH and MCCH) in multicell transmission. The MCH supports semi-static resource allocation. The MCH is mapped to the PMCH.

Retransmission control by hybrid ARQ (HARQ) is applied to the uplink shared channel (UL-SCH) among the uplink transport channels. The UL-SCH supports dynamic or semi-static resource allocation. The UL-SCH is mapped to the physical uplink shared channel (PUSCH).

A random access channel (RACH) is limited to control information. The RACH has a risk of collision. The RACH is mapped to the physical random access channel (PRACH).

The HARQ will be described. The HARQ is a technology for improving communication quality of a transmission path by a combination of automatic repeat request (ARQ) and error correction (forward error correction). The HARQ has an advantage that error correction effectively functions by retransmission even for a transmission path whose communication quality changes. In particular, it is also possible to further improve the quality in retransmission by combining a reception result of first transmission and a reception result of the retransmission.

An example of a retransmission method will be described. In a case where a receiver cannot correctly decode received data, in other words, in a case where a cyclic redundancy check (CRC) error occurs (CRC=NG), "Nack" is transmitted from the receiver to a transmitter. The transmitter that has received "Nack" retransmits the data. In a case where the receiver can correctly decode received data, in other words, in a case where a CRC error does not occur (CRC=OK), "Ack" is transmitted from the receiver to the transmitter. The transmitter that has received "Ack" transmits next data.

A logical channel described in Non Patent Literature 1 (Chapter 6) will be described. A broadcast control channel (BCCH) is a downlink channel for broadcast system control information. The BCCH which is a logical channel is mapped to the broadcast channel (BCH) or the downlink shared channel (DL-SCH) each of which is a transport channel.

A paging control channel (PCCH) is a downlink channel for transmitting changes in paging information and system information. The PCCH is used in a case when the network does not know the cell location of a communication terminal. The PCCH which is a logical channel is mapped to the paging channel (PCH) which is a transport channel.

A common control channel (CCCH) is a channel for transmission control information between a communication terminal and a base station. The CCCH is used in a case where the communication terminal has no RRC connection with the network. In the downlink direction, the CCCH is mapped to the downlink shared channel (DL-SCH) which is a transport channel. In the uplink direction, the CCCH is mapped to the uplink shared channel (UL-SCH) which is a transport channel.

A multicast control channel (MCCH) is a downlink channel for point-to-multipoint transmission. The MCCH is used for transmission of MBMS control information for one or several MTCHs from the network to a communication terminal. The MCCH is used only by a communication terminal that is receiving the MBMS. The MCCH is mapped to the multicast channel (MCH) which is a transport channel.

A dedicated control channel (DCCH) is a channel for transmitting dedicated control information between a communication terminal and the network on a point-to-point basis. The DCCH is used in a case where the communication terminal has an RRC connection. The DCCH is mapped to the uplink shared channel (UL-SCH) in uplink, and is mapped to the downlink shared channel (DL-SCH) in downlink.

A dedicated traffic channel (DTCH) is a point-to-point communication channel for transmitting user information to a dedicated communication terminal. The DTCH exists in both uplink and downlink. The DTCH is mapped to the uplink shared channel (UL-SCH) in uplink, and is mapped to the downlink shared channel (DL-SCH) in downlink.

A multicast traffic channel (MTCH) is a downlink channel for transmitting traffic data from the network to a communication terminal. The MTCH is a channel used only by a communication terminal that is receiving the MBMS. The MTCH is mapped to the multicast channel (MCH).

CGI represents a cell global identifier. ECGI represents an E-UTRAN cell global identifier. A closed subscriber group (CSG) cell is introduced into LTE, long term evolution advanced (LTE-A) described later, and universal mobile telecommunication system (UMTS).

Location tracking of communication terminals is performed in units of areas each including one or more cells. The location tracking is performed in order to track the location of a communication terminal to call the communication terminal, in other words, in order to enable the communication terminal to receive an incoming call, even in an idle state. An area for the location tracking of communication terminals is referred to as a tracking area.

Furthermore, in 3GPP, as Release 10, formulation of long term evolution advanced (LTE-A) standard is in progress (see Non Patent Literatures 3 and 4). LTE-A is based on an LTE radio section communication system, and is configured by adding some new technologies to the system.

Regarding the LTE-A system, in order to support wider transmission bandwidths up to 100 MHz, carrier aggregation (CA) for aggregating two or more component carriers (CCs) is under study. The CA is described in Non Patent Literature 1.

In a case where the CA is configured, a UE which is a communication terminal has only one RRC connection with a network (NW). In the RRC connection, one serving cell provides NAS mobility information and security input. This cell is referred to as a primary cell (PCell). In downlink, a carrier corresponding to the PCell is a downlink primary component carrier (DL PCC). In uplink, a carrier corresponding to the PCell is an uplink primary component carrier (UL PCC).

Depending on the capability of the UE, a secondary cell (SCell) is configured to form a set of serving cells with the PCell. In downlink, a carrier corresponding to the SCell is a downlink secondary component carrier (DL SCC). In uplink, a carrier corresponding to the SCell is an uplink secondary component carrier (UL SCC).

A set of serving cells including one PCell and one or more SCells is configured for one UE.

In addition, new technologies in LTE-A include a technology for supporting wider bands (wider bandwidth extension), a coordinated multiple point transmission and reception (CoMP) technology. The CoMP studied for LTE-A in 3GPP is described in Non Patent Literature 1.

In addition, use of a small eNB (hereinafter, sometimes referred to as a "small-scale base station device") configuring a small cell has been studied in 3GPP in order to cope with enormous traffic in the future. For example, a technology is under study with which a large number of small eNBs are installed to configure a large number of small cells, thereby improving spectral efficiency to increase communication capacity. Specifically, there is dual connectivity (abbreviated as DC) with which a UE is connected to two eNBs to perform communication. The DC is described in Non Patent Literature 1.

One of the eNBs that perform dual connectivity (DC) may be referred to as a "master eNB (abbreviated as MeNB)", and the other thereof may be referred to as a "secondary eNB (abbreviated as SeNB)".

The traffic volume of a mobile network is on the increase, and the communication speed is also increasing. When operations of LTE and LTE-A are fully started, the communication speed is expected to be further increased.

Furthermore, for increasingly advanced mobile communication, a fifth generation (hereinafter, sometimes referred to as "5G") radio access system has been studied whose service is aimed to be launched in or after 2020. For example, in Europe, 5G requirements are compiled by an organization called METIS (see Non Patent Literature 5).

For the 5G radio access system, the followings are exemplified as requirements: as compared with the LTE system, the system capacity is 1000 times, the data transmission speed is 100 times, the data processing latency is one-tenth (1/10), the number of simultaneously connected communication terminals is 100 times, and further reduction in power consumption and reduction in device cost are achieved.

In order to satisfy such requirements, 5G standards have been studied as Release 15 in 3GPP (see Non Patent Literatures 6 to 19). The technology of 5G radio sections is referred to as "new radio access technology" ("new radio" is abbreviated as "NR").

An NR system has been studied on the basis of the LTE system and the LTE-A system, but includes additions and changes from the LTE system and the LTE-A system in the following points.

As an access scheme of NR, OFDM is used in the downlink direction, and OFDM and DFT-spread-OFDM (DFT-s-OFDM) are used in the uplink direction.

In NR, frequencies higher than those in LTE can be used to improve the transmission speed and to reduce the processing latency.

In NR, cell coverage is ensured by forming a narrow beam-shaped transmission/reception range (beamforming) and changing a direction of the beam (beam sweeping).

In a frame configuration of NR, various subcarrier spacings, that is, various numerologies, are supported. Regardless of the numerologies, one subframe is 1 millisecond long, and one slot includes 14 symbols in NR. In addition, the number of slots included in one subframe is one in a numerology with a subcarrier spacing of 15 kHz, and increases in proportion to subcarrier spacings in other numerologies (see Non Patent Literature 13 (3GPP TS38.211)).

A downlink synchronization signal in NR is transmitted as a synchronization signal burst (hereinafter, sometimes referred to as an SS burst) from a base station at a predetermined period for a predetermined duration. The SS burst includes a synchronization signal block (hereinafter, sometimes referred to as an SS block) for each beam of the base station.

The base station transmits the SS blocks of respective beams within the duration of the SS burst while changing the beams. The SS block includes the P-SS, the S-SS, and the PBCH.

In NR, a phase tracking reference signal (PTRS) is added as a downlink reference signal of NR, and thereby an influence of phase noise is reduced. Regarding an uplink reference signal as well, the PTRS is added similarly to the downlink.

In NR, a slot format indication (SFI) has been added to information included in the PDCCH in order to perform flexible switching between the DL and the UL in a slot.

Furthermore, in NR, the base station sets a part of a carrier frequency band (hereinafter, sometimes referred to as bandwidth part (BWP)) in advance for a UE, and the UE performs transmission and reception with the base station in the BWP, thereby reducing power consumption in the UE.

In 3GPP, as a form of the DC, DC performed by an LTE base station and an NR base station connected to an EPC, DC performed by NR base stations connected to a 5G core system, and DC performed by an LTE base station and an NR base station connected to the 5G core system have been studied (see Non Patent Literatures 12, 16, and 19).

In addition, several new technologies have been studied in 3GPP. For example, a positioning technology (see Non Patent Literatures 24 to 27) and integrated access and backhaul (IAB) have been studied (see Non Patent Literatures 16, 28, and 29).

As the positioning technology, for example, a positioning method using a round-trip delay time between a UE and a plurality of base stations (multi-round trip time: multi-RTT) has been studied (see Non Patent Literature 24).

As IAB, for example, multiplexing in radio resources of an access link which is a link between a UE and a base station and a backhaul link which is a link between base stations, latency reduction, and the like have been studied (see Non Patent Literatures 16, 28, and 29).

In addition, in 3GPP, support of a service (which may be an application) using sidelink (SL) communication (also referred to as PC5 communication) in both an evolved packet system (EPS) to be described later and a 5G core system has been studied (see Non Patent Literatures 1, 16, 20, 21, 22, and 23). Examples of the service using the SL communication include a vehicle-to-everything (V2X) service and a proximity service.

### Citation List

### Non Patent Literature

Non Patent Literature 1: 3GPP TS36.300 V16.2.0
Non Patent Literature 2: 3GPP S1-083461
Non Patent Literature 3: 3GPP TR36.814 V9.2.0
Non Patent Literature 4: 3GPP TR36.912 V16.0.0
Non Patent Literature 5: "Scenarios, requirements and KPIs for 5G mobile and wireless system", ICT-317669-METIS/D1.1
Non Patent Literature 6: 3GPP TR23.799 V14.0.0
Non Patent Literature 7: 3GPP TR38.801 V14.0.0
Non Patent Literature 8: 3GPP TR38.802 V14.2.0
Non Patent Literature 9: 3GPP TR38.804 V14.0.0
Non Patent Literature 10: 3GPP TR38.912 V16.0.0
Non Patent Literature 11: 3GPP RP-172115
Non Patent Literature 12: 3GPP TS37.340 V16.2.0
Non Patent Literature 13: 3GPP TS38.211 V16.2.0
Non Patent Literature 14: 3GPP TS38.213 V16.2.0
Non Patent Literature 15: 3GPP TS38.214 V16.2.0
Non Patent Literature 16: 3GPP TS38.300 V16.2.0
Non Patent Literature 17: 3GPP TS38.321 V16.1.0
Non Patent Literature 18: 3GPP TS38.212 V16.2.0
Non Patent Literature 19: 3GPP TS38.331 V16.1.0
Non Patent Literature 20: 3GPP TR23.703 V12.0.0
Non Patent Literature 21: 3GPP TS23.501 V16.5.0
Non Patent Literature 22: 3GPP TS23.287 V16.3.0
Non Patent Literature 23: 3GPP TS23.303 V16.0.0
Non Patent Literature 24: 3GPP TS38.305 V16.0.0
Non Patent Literature 25: 3GPP RP-200928
Non Patent Literature 26: 3GPP TS37.355 V16.0.0
Non Patent Literature 27: 3GPP R1-2004492
Non Patent Literature 28: 3GPP RP-201293
Non Patent Literature 29: 3GPP TS38.401 V16.0.0
Non Patent Literature 30: 3GPP TS23.263 V16.4.0
Non Patent Literature 31: 3GPP TS38.473 V16.2.0
Non Patent Literature 32: 3GPP R2-2008254
Non Patent Literature 33: 3GPP TR37.985 V16.0.0

### Summary

### Technical Problem

In the above positioning technology, when positioning of a communication terminal is performed, information about relative locations of the communication terminal to be positioned and one or more base stations communicable therewith is used. Therefore, in a case where a base station moves, there is a problem in that the accuracy of information to be used for positioning deteriorates, that is, positioning accuracy deteriorates.

In view of the above problem, one of objects of the present disclosure is to realize a communication system capable of accurately performing positioning of a communication terminal even in a case where a base station moves.

### Solution to Problem

A communication system according to the present disclosure includes: a base station; and a communication terminal connected to the base station. The base station transmits a result of reception of an uplink positioning signal transmitted by the communication terminal and location information of the base station to a positioning device that is a device having a positioning function of deriving a location of the communication terminal, and the communication terminal transmits a result of reception of a downlink positioning signal transmitted by the base station to the positioning device.

### Advantageous Effects of Invention

According to the present disclosure, it is possible to realize a communication system capable of accurately performing positioning of a communication terminal even in a case where a base station moves.

Objects, features, aspects, and advantages of the present disclosure will become more apparent from the following detailed description and the accompanying drawings.

### Brief Description of Drawings

FIG. 1 is an explanatory diagram illustrating a configuration of a radio frame used in an LTE communication system.
FIG. 2 is a block diagram illustrating an overall configuration of an LTE communication system 200 that has been discussed in 3GPP.
FIG. 3 is a block diagram illustrating an overall configuration of an NR communication system 210 that has been discussed in 3GPP.
FIG. 4 is a configuration diagram of DC performed by an eNB and a gNB connected to an EPC.
FIG. 5 is a configuration diagram of DC performed by gNBs connected to an NG core.
FIG. 6 is a configuration diagram of DC performed by an eNB and the gNB connected to the NG core.
FIG. 7 is a configuration diagram of DC performed by an eNB and the gNB connected to the NG core.
FIG. 8 is a block diagram illustrating a configuration of user equipment 202 illustrated in FIG. 2.
FIG. 9 is a block diagram illustrating a configuration of a base station 203 illustrated in FIG. 2.
FIG. 10 is a block diagram illustrating a configuration of an MME.
FIG. 11 is a block diagram illustrating a configuration of a 5GC unit.
FIG. 12 is a flowchart schematically illustrating a cell search to an idle state operation performed by a communication terminal (UE) in the LTE communication system.
FIG. 13 is a diagram illustrating an example of a configuration of a cell in an NR system.
FIG. 14 is a sequence diagram illustrating an example of a positioning sequence of a UE in which each base station notifies an LMF of a combination of the location and time information of the base station in a first embodiment.
FIG. 15 is a sequence diagram illustrating another example of the positioning sequence of the UE in which each base station notifies the LMF of a combination of the location and time information of the base station in the first embodiment.
FIG. 16 is a sequence diagram illustrating an operation of notifying, from each of neighbor base stations to a serving base station, a combination of the location and time information of the neighbor base station in a positioning sequence of a UE in a case where a base station includes an LMF in a first modification of the first embodiment.
FIG. 17 is a sequence diagram illustrating an operation of notifying, from a serving base station to a UE, a combination of the location and time information of each of the serving base station and neighbor base stations in a positioning sequence of the UE in a case where the UE includes an LMF in a second modification of the first embodiment.
FIG. 18 is a sequence diagram illustrating an example of a positioning sequence of a UE including a process of notifying, from a DU to a CU, the location of the DU in a second embodiment.
FIG. 19 is a sequence diagram illustrating an example of a positioning sequence of an IAB-node in a third embodiment.
FIG. 20 is a sequence diagram illustrating an example of a positioning sequence in a case where positioning of an IAB-node and that of a UE are simultaneously performed in the third embodiment.
FIG. 21 is a diagram illustrating an example of a protocol stack in a case where a CU includes an adaptation layer in a fourth embodiment.
FIG. 22 is a diagram illustrating an example of a protocol stack in a case where a DU includes the adaptation layer in the fourth embodiment.
FIG. 23 is a diagram illustrating an example of a protocol stack in a case where a BAP is arranged above an adaptation layer in a first modification of the fourth embodiment.
FIG. 24 is a diagram illustrating an example of a protocol stack in a case where the adaptation layer is arranged above the BAP in the first modification of the fourth embodiment.
FIG. 25 is a diagram illustrating another example of the protocol stack in the case where the adaptation layer is arranged above the BAP in the first modification of the fourth embodiment.
FIG. 26 is a diagram illustrating an example of a protocol stack in a case where the adaptation layer is used between a relay-UE and an IAB-node, and the BAP is used between IAB-nodes and between an IAB-node and an IAB-donor DU in the first modification of the fourth embodiment.

### Description of Embodiments

### First Embodiment.

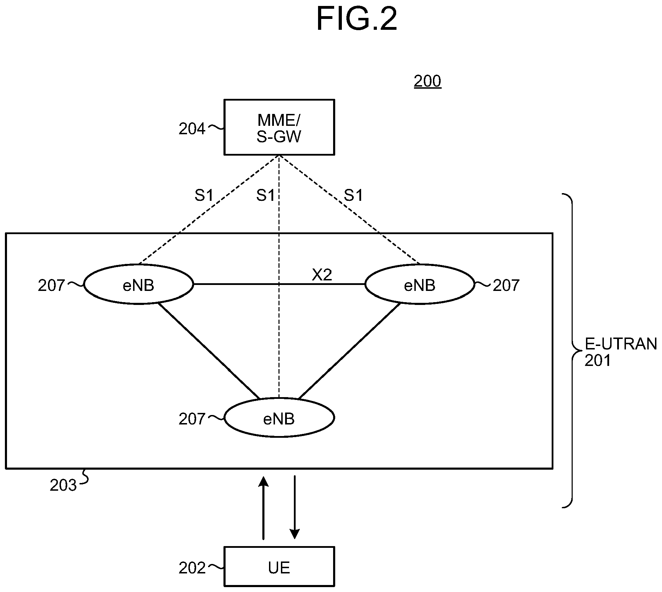

FIG. 2 is a block diagram illustrating an overall configuration of an LTE communication system 200 that has been discussed in 3GPP. FIG. 2 will be described. A radio access network is referred to as an evolved universal terrestrial radio access network (E-UTRAN) 201. A user equipment device (hereinafter referred to as "user equipment (UE)") 202 which is a communication terminal device can perform radio communication with a base station device (hereinafter referred to as "base station (E-UTRAN NodeB (eNB))") 203, and transmits and receives signals by radio communication.

Here, the "communication terminal device" includes not only a user equipment device such as a mobile phone terminal device that is movable, but also a nonmoving device such as a sensor. In the following description, the "communication terminal device" may be simply referred to as a "communication terminal".

If a control protocol for the user equipment 202, for example, radio resource control (RRC), and a user plane (hereinafter, sometimes referred to as a U-plane), for example, a packet data convergence protocol (PDCP), radio link control (RLC), medium access control (MAC), or a physical layer (PHY), are terminated in the base station 203, the E-UTRAN includes one or a plurality of base stations 203.

Radio resource control (RRC) as a control protocol between the user equipment 202 and the base station 203 performs broadcast, paging, RRC connection management, and the like. As states of the base station 203 and the user equipment 202 in RRC, there are RRC_IDLE and RRC_CONNECTED.

In RRC_IDLE, public land mobile network (PLMN) selection, broadcast of system information (SI), paging, cell re-selection, mobility, and the like are performed. In RRC_CONNECTED, the user equipment has RRC connection and can transmit and receive data to and from a network. In addition, in RRC_CONNECTED, handover (HO), measurement of a neighbor cell, and the like are performed.

The base station 203 includes one or a plurality of eNBs 207. A system including an evolved packet core (EPC) which is a core network and the E-UTRAN 201 which is a radio access network is referred to as an evolved packet system (EPS). The EPC which is a core network and the E-UTR_AN 201 which is a radio access network may be collectively referred to as a "network".

Each eNB 207 is connected via an S1 interface to an MME/S-GW unit (hereinafter, sometimes referred to as an "MME unit") 204 including a mobility management entity (MME) or a serving gateway (S-GW), or the MME and the S-GW, and control information is communicated between the eNB 207 and the MME unit 204. A plurality of MME units 204 may be connected to one eNB 207. The eNBs 207 are connected to each other via an X2 interface, and the control information is communicated between the eNBs 207.

The MME unit 204 is a higher-level device, specifically, a higher-level node, and controls connection between the eNB 207 which is a base station and the user equipment (UE) 202. The MME unit 204 configures the EPC which is a core network. The base station 203 configures the E-UTRAN 201.

The base station 203 may configure one cell or a plurality of cells. Each cell has a predetermined range as a coverage which is a range in which communication with the user equipment 202 is possible, and performs radio communication with the user equipment 202 within the coverage. In a case where one base station 203 configures a plurality of cells, each cell is configured to be able to communicate with the user equipment 202.

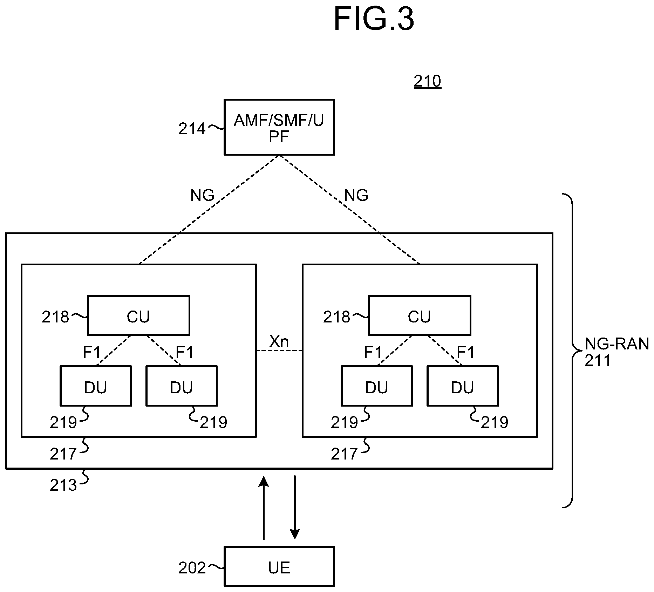

FIG. 3 is a block diagram illustrating an overall configuration of a 5G communication system 210 that has been discussed in 3GPP. FIG. 3 will be described. The radio access network is referred to as a next generation radio access network (NG-RAN) 211. The UE 202 can perform radio communication with an NR base station device (hereinafter referred to as an "NR base station (NG-RAN NodeB (gNB))") 213, and transmits and receives signals by radio communication. The core network is referred to as a 5G core (5GC).

If a control protocol for the UE 202, for example, radio resource control (RRC), and a user plane (hereinafter, sometimes referred to as a U-plane), for example, service data adaptation protocol (SDAP), packet data convergence protocol (PDCP), radio link control (RLC), medium access control (MAC), or physical layer (PHY), are terminated in the NR base station 213, the NG-RAN includes one or a plurality of NR base stations 213.

A function of radio resource control (RRC) as a control protocol between the UE 202 and the NR base station 213 is similar to that of LTE. As states of the NR base station 213 and the UE 202 in RRC, there are RRC_IDLE, RRC_CONNECTED, and RRC_INACTIVE.

RRC_IDLE and RRC_CONNECTED are similar to those in the LTE system. In RRC_INACTIVE, broadcast of system information (SI), paging, cell re-selection, mobility, and the like are performed while connection between the 5G core and the NR base station 213 is maintained.

Each gNB 217 is connected via an NG interface to an AMF/SMF/UPF unit (hereinafter, sometimes referred to as a "5GC unit") 214 including an access and mobility management function (AMF), a session management function (SMF), or a user plane function (UPF), or the AMF, the SMF, and the UPF. Control information and/or user data is communicated between each gNB 217 and the 5GC unit 214. The NG interface is a generic term for an N2 interface between each gNB 217 and the AMF, an N3 interface between each gNB 217 and the UPF, an N11 interface between the AMF and the SMF, and an N4 interface between the UPF and the SMF. A plurality of 5GC units 214 may be connected to one gNB 217. The gNBs 217 are connected to each other via an Xn interface, and control information and/or user data is communicated between the gNBs 217.

The 5GC unit 214 is a higher-level device, specifically, a higher-level node, and distributes paging signals to one or a plurality of base stations 203 and/or base stations 213. In addition, the 5GC unit 214 performs mobility control in an idle state. The 5GC unit 214 manages a tracking area list when the user equipment 202 is in the idle state, an inactive state, and an active state. The 5GC unit 214 starts a paging protocol by transmitting a paging message to a cell belonging to a tracking area in which the user equipment 202 is registered.

The NR base station 213 may also configure one or a plurality of cells similarly to the base station 203. In a case where one NR base station 213 configures a plurality of cells, each cell is configured to be able to communicate with the UE 202.

The gNB 217 may be divided into a central unit (hereinafter, sometimes referred to as a CU) 218 and a distributed unit (hereinafter, sometimes referred to as a DU) 219. One CU 218 is configured in the gNB 217. One or a plurality of DUs 219 are configured in the gNB 217. The CU 218 is connected to the DU 219 via the F1 interface, and control information and/or user data is communicated between the CU 218 and the DU 219.

A unified data management (UDM) function and a policy control function (PCF) described in Non Patent Literature 21 (3GPP TS23.501) may be included in the 5G communication system. The UDM and/or the PCF may be included in the 5GC unit 214 in FIG. 3.

A location management function (LMF) described in Non Patent Literature 24 (3GPP TS38.305) may be provided in the 5G communication system. The LMF may be connected to a base station via the AMF as disclosed in Non Patent Literature 30 (3GPP TS23.263).

A non-3GPP interworking function (N3IWF) described in Non Patent Literature 21 (3GPP TS23.501) may be included in the 5G communication system. The N3IWF may terminate an access network (AN) with the UE in non-3GPP access with the UE.

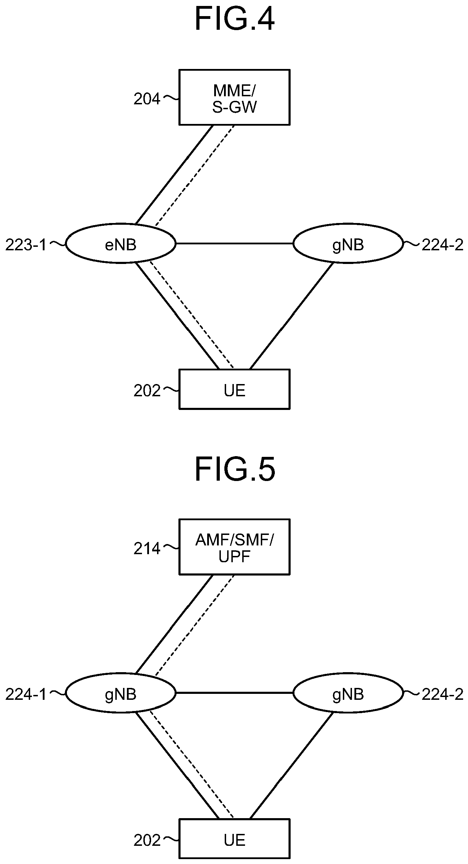

FIG. 4 is a diagram illustrating a configuration of DC performed by an eNB and a gNB connected to the EPC. In FIG. 4, solid lines each indicate U-plane connection, and broken lines each indicate C-plane connection. In FIG. 4, an eNB 223-1 serves as a master base station, and a gNB 224-2 serves as a secondary base station (this DC configuration is sometimes referred to as EN-DC). Although FIG. 4 illustrates an example in which the U-plane connection between the MME unit 204 and the gNB 224-2 is established via the eNB 223-1, the U-plane connection may be directly established between the MME unit 204 and the gNB 224-2.

FIG. 5 is a diagram illustrating a configuration of DC performed by gNBs connected to an NG core. In FIG. 5, solid lines each indicate U-plane connection, and broken lines each indicate C-plane connection. In FIG. 5, a gNB 224-1 serves as a master base station, and the gNB 224-2 serves as a secondary base station (this DC configuration is sometimes referred to as NR-DC). Although FIG. 5 illustrates an example in which the U-plane connection between the 5GC unit 214 and the gNB 224-2 is established via the gNB 224-1, the U-plane connection may be directly established between the 5GC unit 214 and the gNB 224-2.

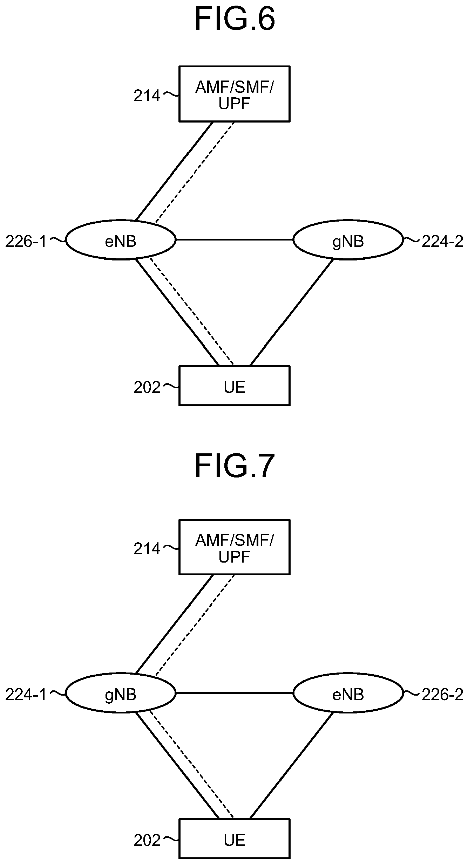

FIG. 6 is a diagram illustrating a configuration of DC performed by an eNB and the gNB connected to the NG core. In FIG. 6, solid lines each indicate U-plane connection, and broken lines each indicate C-plane connection. In FIG. 6, an eNB 226-1 serves as a master base station, and the gNB 224-2 serves as a secondary base station (this DC configuration is sometimes referred to as NG-EN-DC). Although FIG. 6 illustrates an example in which the U-plane connection between the 5GC unit 214 and the gNB 224-2 is established via the eNB 226-1, the U-plane connection may be directly established between the 5GC unit 214 and the gNB 224-2.

FIG. 7 is a diagram illustrating another configuration of DC performed by an eNB and the gNB connected to the NG core. In FIG. 7, solid lines each indicate U-plane connection, and broken lines each indicate C-plane connection. In FIG. 7, the gNB 224-1 serves as a master base station, and an eNB 226-2 serves as a secondary base station (this DC configuration is sometimes referred to as NE-DC). Although FIG. 7 illustrates an example in which the U-plane connection between the 5GC unit 214 and the eNB 226-2 is established via the gNB 224-1, the U-plane connection may be directly established between the 5GC unit 214 and the eNB 226-2.

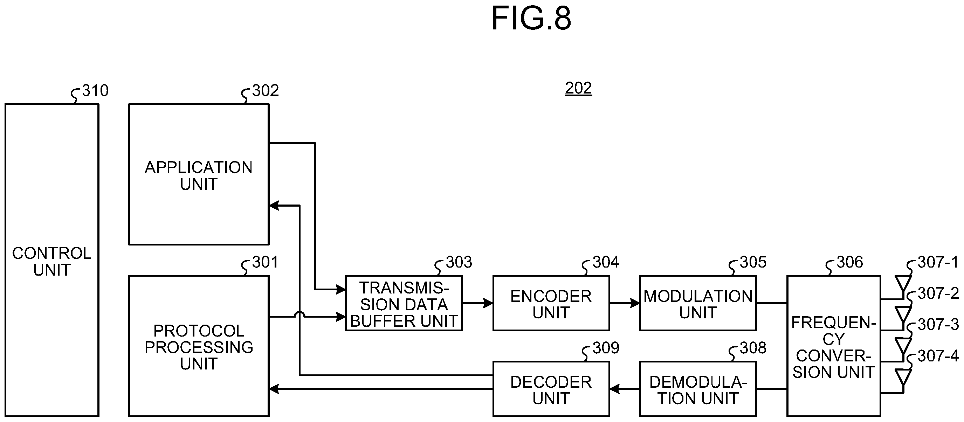

FIG. 8 is a block diagram illustrating a configuration of the user equipment 202 illustrated in FIG. 2. A transmission process performed by the user equipment 202 illustrated in FIG. 8 will be described. First, control data from a protocol processing unit 301 and user data from an application unit 302 are stored in a transmission data buffer unit 303. The data stored in the transmission data buffer unit 303 is passed to an encoder unit 304, and an encoding process such as error correction is performed thereon. There may be data output from the transmission data buffer unit 303 to a modulation unit 305 directly without being subjected to the encoding process. The data encoded by the encoder unit 304 is subjected to a modulation process by the modulation unit 305. The modulation unit 305 may perform precoding in MIMO. The modulated data is converted into a baseband signal, and then the baseband signal is output to a frequency conversion unit 306 to be converted into a radio transmission frequency. Thereafter, transmission signals are transmitted to the base station 203 from antennas 307-1 to 307-4. FIG. 8 exemplifies a case where the number of antennas is four, but the number of antennas is not limited to four.

The user equipment 202 executes a reception process as follows. A radio signal from the base station 203 is received by each of the antennas 307-1 to 307-4. The received signal is converted from a radio reception frequency into a baseband signal by the frequency conversion unit 306, and a demodulation process is performed thereon by a demodulation unit 308. The demodulation unit 308 may perform a weight calculation and a multiplication process. The demodulated data is passed to a decoder unit 309, and a decoding process such as error correction is performed thereon. Among pieces of the decoded data, the control data is passed to the protocol processing unit 301, and the user data is passed to the application unit 302. A series of processes of the user equipment 202 is controlled by a control unit 310. Therefore, although not illustrated in FIG. 8, the control unit 310 is connected to each of components 301 to 309. The control unit 310 is implemented by, for example, processing circuitry configured to include a processor and a memory. That is, the control unit 310 is implemented by the processor executing a program in which a series of processes of the user equipment 202 is described. The program in which a series of processes of the user equipment 202 is described is stored in the memory. Examples of the memory include a nonvolatile or volatile semiconductor memory such as a random access memory (RAM), a read only memory (ROM), or a flash memory. The control unit 310 may be implemented by dedicated processing circuitry such as a field programmable gate array (FPGA), an application specific integrated circuit (ASIC), or a digital signal processor (DSP). In FIG. 8, the number of antennas used by the user equipment 202 for transmission and the number of antennas used thereby for reception may be the same as or different from each other.

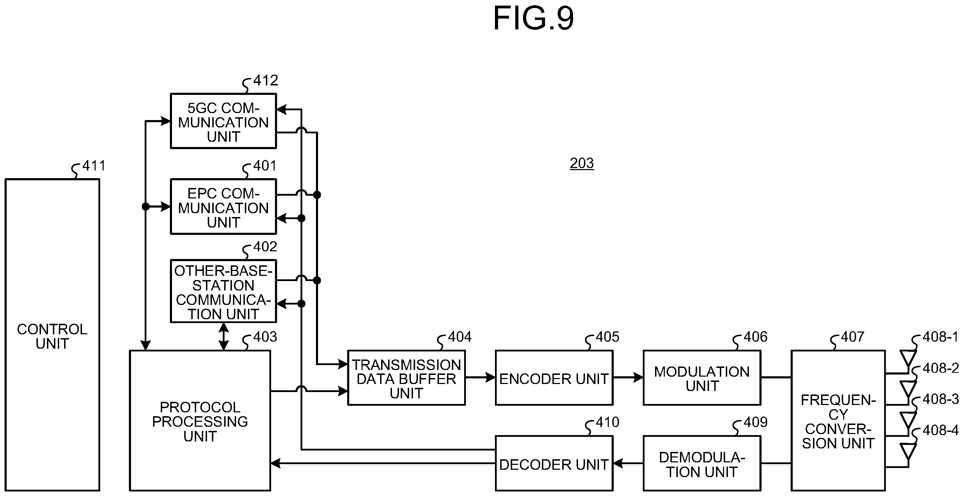

FIG. 9 is a block diagram illustrating a configuration of the base station 203 illustrated in FIG. 2. A transmission process performed by the base station 203 illustrated in FIG. 9 will be described. An EPC communication unit 401 transmits and receives data between the base station 203 and the EPC (such as the MME unit 204). A 5GC communication unit 412 transmits and receives data between the base station 203 and the 5GC (such as the 5GC unit 214). An other-base-station communication unit 402 transmits and receives data to and from other base stations. The EPC communication unit 401, the 5GC communication unit 412, and the other-base-station communication unit 402 each exchange information with a protocol processing unit 403. Control data from the protocol processing unit 403 and user data and control data from the EPC communication unit 401, the 5GC communication unit 412, and the other-base-station communication unit 402 are stored in a transmission data buffer unit 404.

The data stored in the transmission data buffer unit 404 is passed to an encoder unit 405, and an encoding process such as error correction is performed thereon. There may be data output from the transmission data buffer unit 404 to a modulation unit 406 directly without being subjected to the encoding process. The encoded data is subjected to a modulation process by the modulation unit 406. The modulation unit 406 may perform precoding in MIMO. The modulated data is converted into a baseband signal, and then the baseband signal is output to a frequency conversion unit 407 to be converted into a radio transmission frequency. Thereafter, transmission signals are transmitted from antennas 408-1 to 408-4 to one or a plurality of UEs 202. FIG. 9 exemplifies a case where the number of antennas is four, but the number of antennas is not limited to four.

The base station 203 executes a reception process as follows. Radio signals from one or a plurality of UEs 202 are received by the antennas 408. The received signals are each converted from a radio reception frequency into a baseband signal by the frequency conversion unit 407, and a demodulation process is performed thereon by a demodulation unit 409. The demodulated data is passed to a decoder unit 410, and a decoding process such as error correction is performed thereon. Among pieces of the decoded data, the control data is passed to the protocol processing unit 403, the 5GC communication unit 412, the EPC communication unit 401, or the other-base-station communication unit 402, and the user data is passed to the 5GC communication unit 412, the EPC communication unit 401, or the other-base-station communication unit 402. A series of processes of the base station 203 is controlled by a control unit 411. Therefore, although not illustrated in FIG. 9, the control unit 411 is connected to each of components 401 to 410, and 412. Similarly to the control unit 310 of the user equipment 202 described above, the control unit 411 is implemented by processing circuitry configured to include a processor and a memory, or dedicated processing circuitry such as an FPGA, an ASIC, or a DSP. In FIG. 9, the number of antennas used by the base station 203 for transmission and the number of antennas used thereby for reception may be the same as or different from each other.

FIG. 9 is a block diagram illustrating the configuration of the base station 203, but the base station 213 may have a configuration similar thereto. In addition, in FIGS. 8 and 9, the number of antennas of the user equipment 202 and the number of antennas of the base station 203 may be the same as or different from each other.

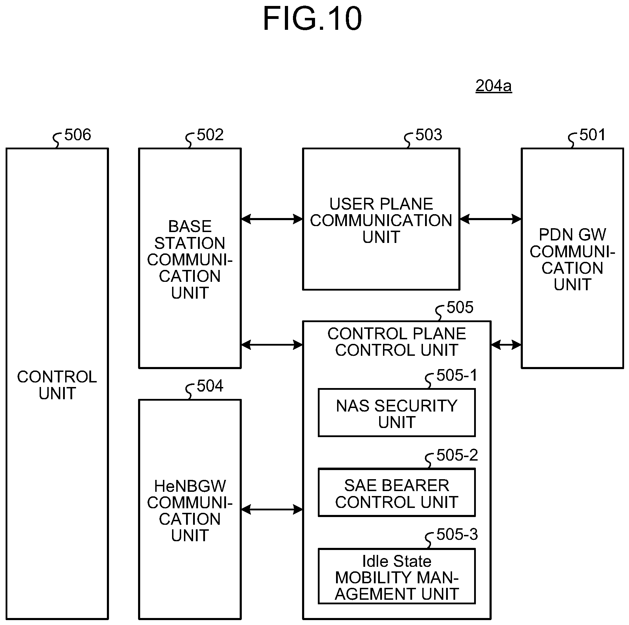

FIG. 10 is a block diagram illustrating a configuration of an MME. FIG. 10 illustrates a configuration of an MME 204a included in the MME unit 204 illustrated in FIG. 2 described above. A PDN GW communication unit 501 transmits and receives data between the MME 204a and a packet data network gate way (PDN GW). A base station communication unit 502 transmits and receives data between the MME 204a and the base station 203 via the S1 interface. In a case where data received from the PDN GW is user data, the user data is passed from the PDN GW communication unit 501 to the base station communication unit 502 via a user plane communication unit 503, and transmitted to one or a plurality of base stations 203. In a case where data received from the base station 203 is user data, the user data is passed from the base station communication unit 502 to the PDN GW communication unit 501 via the user plane communication unit 503, and transmitted to the PDN GW.

In a case where the data received from the PDN GW is control data, the control data is passed from the PDN GW communication unit 501 to a control plane control unit 505. In a case where the data received from the base station 203 is control data, the control data is passed from the base station communication unit 502 to the control plane control unit 505.

A HeNBGW communication unit 504 transmits and receives data between the MME 204a and a home-eNB gate way (HeNB GW) . Control data received by the HeNBGW communication unit 504 from the HeNB GW is passed to the control plane control unit 505. The HeNBGW communication unit 504 transmits control data input from the control plane control unit 505 to the HeNB GW.

The control plane control unit 505 includes a NAS security unit 505-1, an SAE bearer control unit 505-2, an idle state mobility management unit 505-3, and the like, and performs overall processes on a control plane (hereinafter, sometimes referred to as a C-plane). The NAS security unit 505-1 provides security of a non-access stratum (NAS) message and the like. The SAE bearer control unit 505-2 performs management of system architecture evolution (SAE) bearers, and the like. The idle state mobility management unit 505-3 performs mobility management of an idle state (LTE-IDLE state or also simply referred to as idle), generation and control of a paging signal in the idle state, addition, deletion, update, and search of a tracking area of one or a plurality of UEs 202 under the management thereof, tracking area list management, and the like.

The MME 204a distributes paging signals to one or a plurality of base stations 203. In addition, the MME 204a performs mobility control in the idle state. The MME 204a manages a tracking area list when the user equipment 202 is in the idle state and an active state. The MME 204a starts a paging protocol by transmitting a paging message to a cell belonging to a tracking area in which the user equipment 202 is registered. The idle state mobility management unit 505-3 may manage CSG of the eNB 207 connected to the MME 204a, CSG IDs, and a whitelist.

A series of processes of the MME 204a is controlled by a control unit 506. Therefore, although not illustrated in FIG. 10, the control unit 506 is connected to each of components 501 to 505. Similarly to the control unit 310 of the user equipment 202 described above, the control unit 506 is implemented by processing circuitry configured to include a processor and a memory, or dedicated processing circuitry such as an FPGA, an ASIC, or a DSP.

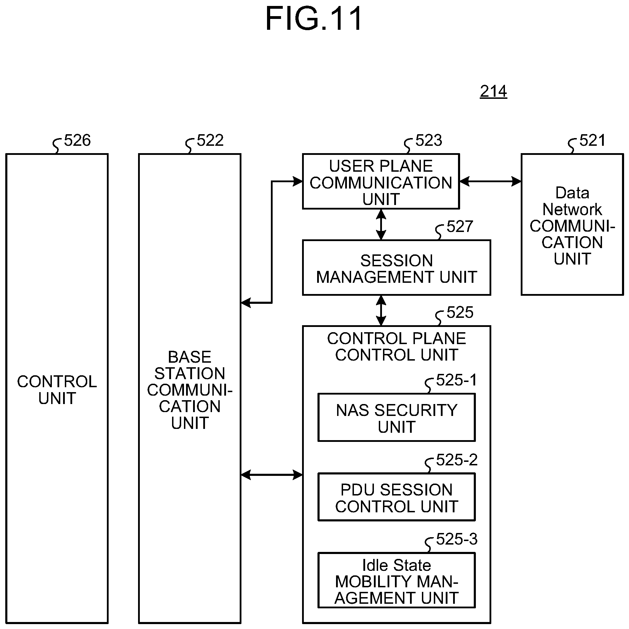

FIG. 11 is a block diagram illustrating a configuration of the 5GC unit. FIG. 11 illustrates a configuration of the 5GC unit 214 illustrated in FIG. 3 described above. FIG. 11 illustrates a case where a configuration of the AMF, a configuration of the SMF, and a configuration of the UPF are included in the 5GC unit 214 illustrated in FIG. 5. A data network communication unit 521 transmits and receives data between the 5GC unit 214 and a data network. A base station communication unit 522 transmits and receives data via the S1 interface between the 5GC unit 214 and the base station 203 and/or via the NG interface between the 5GC unit 214 and the base station 213. In a case where data received from the data network is user data, the user data is passed from the data network communication unit 521 to the base station communication unit 522 via a user plane communication unit 523, and transmitted to one or a plurality of base stations 203 and/or base stations 213. In a case where data received from the base station 203 and/or the base station 213 is user data, the user data is passed from the base station communication unit 522 to the data network communication unit 521 via the user plane communication unit 523, and transmitted to the data network.

In a case where data received from the data network is control data, the control data is passed from the data network communication unit 521 to a session management unit 527 via the user plane communication unit 523. The session management unit 527 passes the control data to a control plane control unit 525. In a case where data received from the base station 203 and/or the base station 213 is control data, the control data is passed from the base station communication unit 522 to the control plane control unit 525. The control plane control unit 525 passes the control data to the session management unit 527.

The control plane control unit 525 includes a NAS security unit 525-1, a PDU session control unit 525-2, an idle state mobility management unit 525-3, and the like, and performs overall processes on a control plane (hereinafter, sometimes referred to as a C-plane). The NAS security unit 525-1 provides security of a non-access stratum (NAS) message, and the like. The PDU session control unit 525-2 performs management of a PDU session between the user equipment 202 and the 5GC unit 214, and the like. The idle state mobility management unit 525-3 performs mobility management of an idle state (RRC-IDLE state or also simply referred to as idle), generation and control of a paging signal in the idle state, addition, deletion, update, and search of a tracking area of one or a plurality of UEs 202 under the management thereof, tracking area list management, and the like.

A series of processes of the 5GC unit 214 is controlled by a control unit 526. Therefore, although not illustrated in FIG. 11, the control unit 526 is connected to each of components 521 to 523, 525, and 527. Similarly to the control unit 310 of the user equipment 202 described above, the control unit 526 is implemented by processing circuitry configured to include a processor and a memory, or dedicated processing circuitry such as an FPGA, an ASIC, or a DSP.

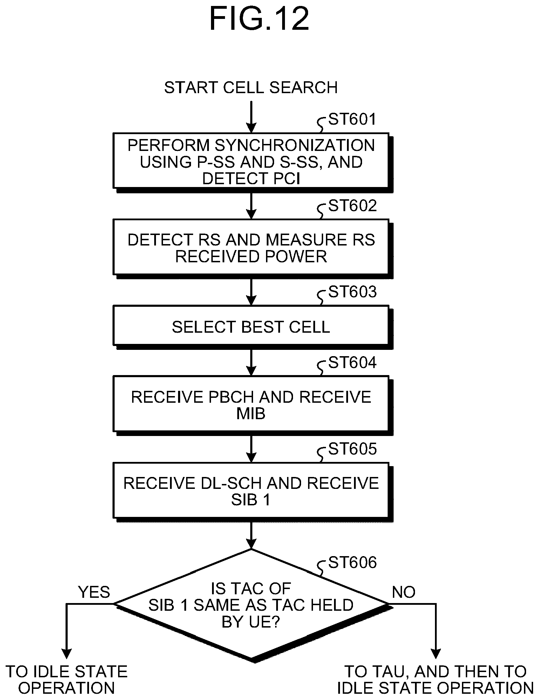

Next, an example of a cell search method in a communication system will be described. FIG. 12 is a flowchart schematically illustrating a cell search to an idle state operation performed by a communication terminal (UE) in the LTE communication system. When starting the cell search, in step ST601, the communication terminal synchronizes a slot timing and a frame timing using a primary synchronization signal (P-SS) and a secondary synchronization signal (S-SS) transmitted from a neighbor base station.

The P-SS and the S-SS are collectively referred to as a synchronization signal (SS). Synchronization codes that correspond one-to-one to PCIs are allocated to the synchronization signals (SSs), the PCIs being allocated on a per cell basis. As the number of PCIs, 504 different numbers are studied. The communication terminal performs synchronization using the 504 different numbers of PCIs and detects (specifies) a PCI of a synchronized cell.

Next, in step ST602, the communication terminal detects, for the synchronized cell, a cell-specific reference signal (CRS) which is a reference signal (RS) transmitted from the base station for each cell, and measures reference signal received power (RSRP). Codes that correspond one-to-one to the PCIs are used for reference signals (RSs). Separation from other cells can be performed by obtaining correlation using the codes. By deriving the code for the RS of the cell from the PCI specified in step ST601, it is possible to detect the RS and to measure the RS received power.

Next, in step ST603, the communication terminal selects a cell having the best RS reception quality, for example, a cell having the highest RS received power, that is, the best cell, from among the one or more cells detected up to step ST602.

Next, in step ST604, the communication terminal receives the PBCH of the best cell and obtains the BCCH which is broadcast information. A master information block (MIB) including cell configuration information is mapped to the BCCH on the PBCH. Accordingly, the MIB is obtained by receiving the PBCH to obtain the BCCH. Examples of the information of the MIB include a downlink (DL) system bandwidth (also referred to as transmission bandwidth configuration (dl-bandwidth)), the number of transmission antennas, and a system frame number (SFN).

Next, in step ST605, the communication terminal receives the DL-SCH of the cell on the basis of the cell configuration information of the MIB to obtain a system information block (SIB) 1 in the broadcast information BCCH. The SIB 1 includes information about access to the cell, information about cell selection, and scheduling information of other SIBs (SIB k; k is an integer equal to or greater than 2). The SIB 1 further includes a tracking area code (TAC).

Next, in step ST606, the communication terminal compares the TAC of the SIB 1 received in step ST605 with a TAC portion of a tracking area identity (TAI) in the tracking area list already held by the communication terminal. The tracking area list is also referred to as a TAI list. The TAI is identification information for identifying a tracking area, and includes a mobile country code (MCC), a mobile network code (MNC), and a tracking area code (TAC). The MCC is a country code. The MNC is a network code. The TAC is a code number of the tracking area.

If the TAC received in step ST605 is the same as the TAC included in the tracking area list as a result of the comparison in step ST606, the communication terminal enters an idle state operation in the cell. If the TAC received in step ST605 is not included in the tracking area list as a result of the comparison, the communication terminal requests, through the cell, a core network (EPC) including the MME or the like to change the tracking area in order to perform a tracking area update (TAU).

In the example illustrated in FIG. 12, from the cell search to the idle state operation in the LTE system are exemplified, but in the NR system, the best beam may be selected in addition to the best cell in step ST603. In addition, in the NR system, information on a beam, for example, a beam identifier may be acquired in step ST604. Furthermore, in the NR system, scheduling information of remaining minimum SI (RMSI) may be acquired in step ST604. In the NR system, the RMSI may be received in step ST605.

A device configuring a core network (hereinafter, sometimes referred to as a "core-network-side device") updates the tracking area list on the basis of an identification number (such as a UE-ID) of a communication terminal transmitted from the communication terminal together with a TAU request signal. The core-network-side device transmits the updated tracking area list to the communication terminal. The communication terminal rewrites (updates) the TAC list held by the communication terminal on the basis of the received tracking area list. Thereafter, the communication terminal enters an idle state operation in the cell.

The spread of smartphones and tablet terminal devices results in explosively increasing traffic in cellular radio communication, and there is a worldwide concern about a shortage of radio resources. In order to deal with the above to improve the spectral efficiency, downsizing of cells to advance spatial separation is under study.

In a conventional cell configuration, a cell configured by an eNB has a relatively wide range of coverage. A cell is conventionally configured to cover a certain area by such a relatively wide range of coverage of a plurality of cells configured by a plurality of eNBs.

In a case where cells are downsized, a cell configured by the eNB has a range of coverage narrower than the coverage of a cell configured by a conventional eNB. Accordingly, in order to cover a certain area similarly to conventional cases, a large number of eNBs configuring downsized cells as compared with the conventional eNBs are required.

In the following description, a cell having relatively large coverage such as the cell configured by a conventional eNB is referred to as a "macro cell", and an eNB configuring the macro cell is referred to as a "macro eNB". In addition, a cell having a relatively small coverage such as a downsized cell is referred to as a "small cell", and an eNB configuring the small cell is referred to as a "small eNB".

The macro eNB may be, for example, a "wide area base station" described in Non Patent Literature 7.

The small eNB may be, for example, a low power node, a local area node, a hotspot, or the like. In addition, the small eNB may be a pico eNB configuring a picocell, a femto eNB configuring a femtocell, a HeNB, a remote radio head (RRH), a remote radio unit (RRU), remote radio equipment (RRE), or a relay node (RN). Furthermore, the small eNB may be a "local area base station" or a "home base station" described in Non Patent Literature 7.

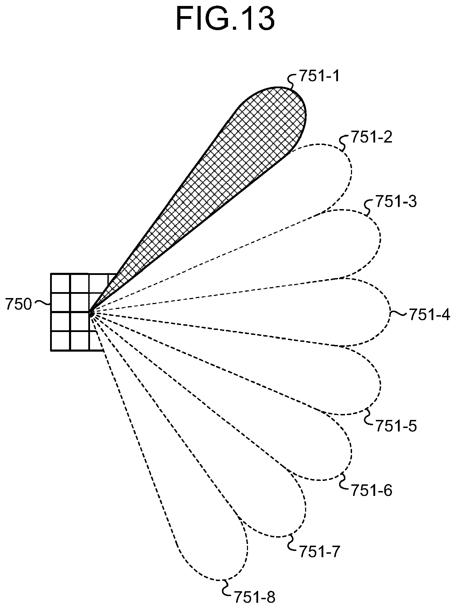

FIG. 13 illustrates an example of a configuration of a cell in NR. In the cell in NR, narrow beams are formed and transmitted in different directions. In the example illustrated in FIG. 13, a base station 750 performs transmission and reception to and from user equipment using a beam 751-1 at a certain time. The base station 750 performs transmission and reception to and from the user equipment using a beam 751-2 at another time. Thereafter, the base station 750 similarly performs transmission and reception to and from the user equipment using one or more of the beams 751-3 to 751-8. Thus, the base station 750 configures a cell with a wide range.

Although FIG. 13 illustrates an example in which the number of beams used by the base station 750 is eight, the number of beams may be different from eight. In addition, although the number of beams simultaneously used by the base station 750 is one in the example illustrated in FIG. 13, the number of beams may be two or more.

In 3GPP, sidelink (SL) is supported for device to device (D2D) communication and vehicle to vehicle (V2V) communication (see Non Patent Literatures 1 and 16). The SL is defined by a PC5 interface.

A physical channel (see Non Patent Literature 1) used for the SL will be described. A physical sidelink broadcast channel (PSBCH) carries information related to a system and synchronization, and is transmitted from a UE.

A physical sidelink discovery channel (PSDCH) carries a sidelink discovery message from a UE.

A physical sidelink control channel (PSCCH) carries control information from a UE for sidelink communication and V2X sidelink communication.

A physical sidelink shared channel (PSSCH) carries data from a UE for sidelink communication and V2X sidelink communication.

A physical sidelink feedback channel (PSFCH) carries HARQ feedback on the sidelink from a UE that has received PSSCH transmission to a UE that has transmitted the PSSCH.

A transport channel (see Non Patent Literature 1) used for the SL will be described. A sidelink broadcast channel (SL-BCH) has a predetermined transport format and is mapped to the PSBCH which is a physical channel.

A sidelink discovery channel (SL-DCH) has periodic broadcast transmission of a predetermined format having a fixed size. In addition, the SL-DCH supports both UE autonomous resource selection and resource allocation scheduled by eNB. In the UE autonomous resource selection, there is a collision risk, and when dedicated resources are allocated to a UE by an eNB, there is no collision. In addition, the SL-DCH supports HARQ combining but does not support HARQ feedback. The SL-DCH is mapped to the PSDCH which is a physical channel.

A sidelink shared channel (SL-SCH) supports broadcast transmission. The SL-SCH supports both UE autonomous resource selection and resource allocation scheduled by eNB. In the UE autonomous resource selection, there is a collision risk, and when dedicated resources are allocated to a UE by an eNB, there is no collision. In addition, the SL-SCH supports HARQ combining but does not support HARQ feedback. Furthermore, the SL-SCH supports dynamic link adaptation by changing transmission power, modulation, and coding. The SL-SCH is mapped to the PSSCH which is a physical channel.

A logical channel (see Non Patent Literature 1) used for the SL will be described. A sidelink broadcast control channel (SBCCH) is a sidelink channel for broadcasting sidelink system information from one UE to another UE. The SBCCH is mapped to the SL-BCH which is a transport channel.

A sidelink traffic channel (STCH) is a point-to-multipoint sidelink traffic channel for transmitting user information from one UE to another UE. The STCH is used only by a UE having a sidelink communication capability and a UE having a V2X sidelink communication capability. Point-to-point communication between two UEs having the sidelink communication capabilities is also realized by using the STCH. The STCH is mapped to the SL-SCH which is a transport channel.

A sidelink control channel (SCCH) is a sidelink control channel for transmitting control information from one UE to another UE. The SCCH is mapped to the SL-SCH which is a transport channel.

In 3GPP, support of V2X communication also in NR has been studied. The study of the V2X communication in NR has been progressed on the basis of the LTE system and the LTE-A system, but there are additions and changes from the LTE system and the LTE-A system in the following points.

In LTE, the SL communication uses broadcast only. In NR, as the SL communication, support of unicast and groupcast in addition to broadcast has been studied (see Non Patent Literature 22 (3GPP TS23.287)).

Support of HARQ feedback (Ack/Nack), a CSI reporting, and the like in unicast communication and groupcast communication has been studied.

In order to support unicast and groupcast in addition to broadcast in the SL communication, support of PC5-S signaling has been studied (see Non Patent Literature 22 (3GPP TS23.287)). For example, PC5-S signaling is implemented to establish a link for implementing SL, i.e., PC5 communication. The link is implemented in a V2X layer and is also referred to as a layer 2 link.

In addition, support of RRC signaling in the SL communication has been studied (see Non Patent Literature 22 (3GPP TS23.287)). The RRC signaling in the SL communication is also referred to as PC5 RRC signaling. For example, it has been proposed to perform notification, between UEs that perform PC5 communication, of capability of each UE, and of AS layer configuration for performing the V2X communication using the PC5 communication.

Positioning of a UE may be performed by using transmission and reception of positioning signals between a base station and the UE. A downlink positioning signal may be, for example, a positioning reference signal (PRS), an SS block, a DM-RS, or a PTRS. An uplink positioning signal may be, for example, a sounding reference signal (SRS), a PRACH, a DM-RS, or a PTRS. For example, the base station may transmit a downlink positioning signal to the UE. The UE may transmit an uplink positioning signal to the base station. The downlink positioning signal transmission from the base station and the uplink positioning signal transmission from the UE may be performed independently. As another example, the UE may transmit the uplink positioning signal in response to receiving the downlink positioning signal from the base station. As another example, the base station may transmit the downlink positioning signal in response to receiving the uplink positioning signal from the UE.

The UE may notify an LMF of a result of reception of the downlink positioning signal. The result of reception of the downlink positioning signal may include, for example, information about propagation delay of the downlink positioning signal or information about an arrival direction of the downlink positioning signal. As another example, the UE may transmit, to the LMF, information about a time gap between the reception of the downlink positioning signal and the transmission of the uplink positioning signal, information about uplink positioning signal transmission time, or information about downlink positioning signal reception time.

The base station may notify the LMF of a result of reception of the uplink positioning signal. The result of reception of the uplink positioning signal may include, for example, information about propagation delay of the uplink positioning signal or information about an arrival direction of the uplink positioning signal. As another example, the base station may notify the LMF of information about downlink positioning signal transmission time, may transmit information about uplink positioning signal reception time, or may transmit information about a time gap between the reception of the uplink positioning signal and the transmission of the downlink positioning signal.

The LMF may derive the location of the UE by using the above-described information from the UE and/or the base station.

In positioning of the UE, the base station may be stationary or moving.

In the above description, the following problem occurs. That is, in the positioning of the UE, information about a relative location thereof with respect to the base station is used. Accordingly, when the base station moves, an error is caused in a positioning result of the UE, which is a problem.

The first embodiment discloses a solution to the above problem.

The base station notifies the LMF of information about the location of the base station. Time information may be provided. The base station may transmit the information to the LMF once or a plurality of times.

The base station may notify the LMF of information in which the location and the time information of the base station are associated with each other. The LMF may use the information for location calculation of the UE. Consequently, for example, since the location of the base station at the time is known, the LMF can accurately calculate the location of the UE.

The following (1) to (12) will be disclosed as examples of information to be notified by the base station to the LMF.
(1) Information for identifying the base station.
(2) Information about the location of the base station.
(3) Information about a result of reception of the positioning signal.
(4) Information about time.
(5) Information about the speed of the base station.
(6) Information about the acceleration of the base station.
(7) Information about a positioning method.
(8) Information about a validity period of notification contents.
(9) Information about a UE to be positioned.
(10) Information about a DU, the information being similar to (1) to (8) described above, or a combination thereof.
(11) Information about a TRP, the information being similar to (1) to (8) described above, or a combination thereof.
(12) A combination of (1) to (11) described above.

The information of (1) described above may be, for example, an identifier of the base station. Information on the identifier may be, for example, a gNB-ID. The LMF may identify the base station that has performed the notification by using the information. Consequently, for example, it is possible for the LMF to easily identify the base station that has performed the notification, and as a result, a positioning procedure in a communication system can be promptly executed.

The information of (2) described above may include, for example, information indicating the location of the base station. The information indicating the location of the base station may be, for example, information indicating latitude, longitude, and/or altitude, or information indicating a relative location from a predetermined point. Consequently, for example, the LMF can reduce an error in the location calculation of the UE.

The information of (2) described above may include information about the accuracy of the location of the base station. For example, the information about accuracy may be provided regardless of coordinate axes or may be provided for each coordinate axis. As an example in which the information is provided for each coordinate axis, accuracy may be provided for each of latitude, longitude, and altitude, or accuracy in the horizontal direction, that is, the latitude-longitude direction and accuracy in the vertical direction, that is, the altitude direction may be provided. Consequently, for example, the LMF can derive accuracy in the location calculation of the UE.

The information of (2) described above may include, for example, information about zones disclosed in Non Patent Literature 33 (3GPP TR37.985). The number of pieces of the information about zones may be one, or may be two or more. The LMF may change a base station used for positioning by using the information. For example, the LMF may use, as a base station used for positioning the UE, a base station belonging to the same zone. Consequently, for example, it is possible to prevent a range including a base station used for positioning from being unnecessarily enlarged, and as a result, positioning accuracy can be improved.

The LMF may perform reallocation of a zone to the base station by using the information indicating the location of the base station and information indicating the zone. The LMF may notify the base station of information on the zone after the reallocation. The base station may update the information on the zone of the base station by using the information. Consequently, for example, in sidelink communication performed by a UE under the base station, interference with another UE can be reduced.

The information of (3) described above may include information about propagation delay of the positioning signal, information about the accuracy of the propagation delay, information about an angle of arrival of the positioning signal, information about the accuracy of the angle of arrival, or information obtained by combining a plurality of pieces of the information described above. Consequently, for example, the LMF can promptly derive the location of the UE.

The information of (4) described above may include, for example, information about a time of derivation of the location of the base station, information about the accuracy of the time, information about a time of transmission of the positioning signal to the UE, information about the accuracy of the time, information about a time of reception of the positioning signal from the UE, information about the accuracy of the time, or information obtained by combining a plurality of pieces of the information described above. The LMF may derive the location of the UE at a certain time by using the information. For example, the LMF may derive the location of the UE by using a combination including a time of derivation of the location of the base station, a time of transmission of the positioning signal to the UE, and a time of reception of the positioning signal from the UE, the times being close to each other. Consequently, for example, the LMF can improve the accuracy of the location derivation of the UE.

The information of (5) described above may be, for example, the one-dimensional speed of the base station, the speed thereof in each of the horizontal direction and the vertical direction, or the speed thereof in the latitude, longitude, and/or altitude direction. The LMF may calculate the location of the UE by using the information. Consequently, for example, the LMF can improve the accuracy of the location derivation of the UE.

The information of (6) described above may be, for example, an absolute value of the acceleration of the base station, the acceleration thereof in each of the horizontal direction and the vertical direction, or the acceleration thereof in the latitude, longitude, and/or altitude direction. The LMF may calculate the location of the UE by using the information. Consequently, for example, the LMF can improve the accuracy of the location derivation of the UE.

The information of (7) described above may be, for example, information indicating a positioning method using radio waves of the communication system. The positioning method may be, for example, observed time difference of arrival (OTDOA), enhanced cell ID (E-CID), NR E-CID, Multi-RTT using round-trip time (RTT) between each of the plurality of base stations and the UE, downlink angle of departure (DL-AoD), downlink time difference of arrival (DL-TDOA), uplink time difference of arrival (UL-TDOA), or uplink angle of arrival (UL-AoA) disclosed in Non Patent Literature 24 (3GPP TS38.305). As another example, the information of (7) described above may be positioning using a global navigation satellite system (GNSS), positioning using an atmospheric pressure sensor, positioning using a wireless local area network (WLAN), positioning using Bluetooth (registered trademark), or positioning using a terrestrial beacon system. The LMF may acquire information about the positioning method of the UE by using the information. Consequently, for example, it is possible for the LMF to promptly acquire the information about the positioning method of the UE, and as a result, the LMF can promptly perform positioning of the UE.

The information of (8) described above may be information indicating a validity period of notification from the base station to the LMF. The validity period may be determined, for example, by using a requirement (e.g., accuracy) for positioning of the UE, or by using the speed of the base station. The LMF may acquire, by using the information, a period during which the information about the location of the base station or the like is valid. The LMF may request the base station to notify information on location and the like to the LMF in a case where the validity period has expired. The base station may perform the notification again to the LMF in the case where the validity period has expired. Consequently, for example, it is possible to improve the accuracy of the positioning of the UE.

The information of (9) described above may be information about an identifier of the UE to be positioned. The information about the identifier may be, for example, a UE-ID, or may be a subscription permanent identifier (SUPI), a subscription concealed identifier (SUCI), a permanent equipment identifier (PEI), and/or a 5G globally unique temporary identifier (5G-GUTI) disclosed in Non Patent Literature 21 (3GPP TS23.501). The LMF may identify the UE by using the information. Consequently, for example, even when a plurality of UEs are being positioned, the LMF can promptly identify the UEs.

The information of (10) described above may be, for example, information obtained by replacing the base station with the DU in (1) to (8) described above. The number of pieces of the information of (10) described above may be one, or two or more pieces, for example, as many pieces of the information as the number of DUs, may be included. Consequently, for example, even in a communication system using a base station having a configuration divided into the CU and the DU, it is possible to improve the accuracy of the positioning of the UE.

The information of (11) described above may be, for example, information obtained by replacing the base station with the TRP in (1) to (8) described above. The number of pieces of the information of (11) described above may be one, or two or more pieces, for example, as many pieces of the information as the number of TRPs, may be included. Consequently, for example, even in a communication system using a base station including the TRP, it is possible to improve the accuracy of the positioning of the UE.

The information in which the location and the time information of the base station are associated with each other may be included in assistance data notification from the gNB to the LMF disclosed in Non Patent Literature 24 (3GPP TS38.305). For example, the assistant data notification may include the information of (4) described above. Consequently, for example, it is possible to reduce the amount of signaling between the base station and the LMF.

As another example, the information may be included in notification of uplink information/UE configuration data disclosed in Non Patent Literature 24 (3GPP TS38.305). For example, the notification may include the information of (2) and the information of (4) described above. Consequently, for example, an effect similar to that described above is obtained.

As another example, the information may be included in notification of a result of reception of a positioning signal disclosed in Non Patent Literature 24 (3GPP TS38.305). For example, the notification may include the information of (2) and the information of (4) described above. The information of (4) may be, for example, information on a time of acquisition of the location of the base station. Consequently, for example, an effect similar to that described above is obtained.

As another example, new signaling for transmitting the information may be provided. The new signaling may be, for example, TRP information update. Consequently, for example, it is possible to provide backward compatibility in the communication system.

The base station may perform notification, only once, of the information in which the location and the time information of the base station are associated with each other. Only one piece of the associated information may be included in the notification to be performed once, or a plurality of pieces of the associated information may be included therein. As an example of a case where a plurality of pieces of the information are included, a range of time included in the plurality of pieces of the information may include time for transmitting and receiving positioning signals. Consequently, for example, it is possible for the LMF to apply not an extrapolation process, but an interpolation process to the derivation of the location of the base station and/or the UE, and as a result, the accuracy of the location calculation can be improved. As another example of the case where a plurality of pieces of the information are included, a range of time included in the plurality of pieces of the information need not include time for transmitting and receiving the positioning signals. For example, an end point of the range may precede an end point of the time for transmitting and receiving the positioning signals. Consequently, for example, it is possible to reduce latency in the positioning.

As another example, the base station may perform notification, a plurality of times, of the information in which the location and the time information of the base station are associated with each other. The notification to be performed a plurality of times may be performed, for example, by specifying the number of times, or may be performed without specifying the number of times. The notification to be performed a plurality of times may be periodically performed, for example. Information about the number of times and/or the period may be defined in advance in the standards, or may be determined by the LMF, the AMF, or the base station. The LMF and/or the AMF may notify the base station of the information. For example, the LMF may notify the base station of the information by using LPP signaling and/or NRPPa signaling. The AMF may notify the base station of the information by using NAS signaling. The base station may start the periodic notification before transmission and reception of positioning signals, in response to an instruction from the LMF to start transmission and reception of positioning signals, or after an instruction to the UE to transmit an uplink positioning signal. The base station may terminate the periodic notification in response to completion of transmission and reception of the positioning signals to and from the UE, or in response to notification of results of transmission and reception of the positioning signals to the LMF. Consequently, for example, it is possible to improve the accuracy of the positioning of the UE.

As another example regarding the notification of the information to be performed a plurality of times, the base station may perform the notification to the LMF again in response to expiration of the validity period of the notification to the LMF, or in response to an increased difference between the location included in the previous notification and the current location of the base station, the difference being a predetermined value or more. The predetermined value may be determined by using, for example, a UE positioning requirement (e.g., accuracy). Consequently, for example, it is possible to improve the accuracy of the positioning of the UE.

As another example regarding the notification of the information to be performed a plurality of times, the base station may perform the notification in response to a predetermined event. For example, the base station may perform the notification in response to the instruction from the LMF to start transmission and reception of the positioning signals, in response to the instruction to the UE to transmit the uplink positioning signal, in response to the completion of transmission and reception of the positioning signals to and from the UE, in response to the notification of the results of transmission and reception of the positioning signals to the LMF, or in any two or more of the above. Consequently, for example, it is possible to reduce the amount of signaling between the base station and the LMF.

The notification of the information from the base station to the LMF may be autonomously performed from the base station to the LMF. For example, the base station may perform the notification in response to a predetermined event. For example, the predetermined event may be reception of the instruction from the LMF to start transmission and reception of the positioning signals, transmission of the instruction to the UE to transmit the uplink positioning signal, completion of transmission and reception of the positioning signals to and from the UE, transmission of the notification of the results of transmission and reception of the positioning signals to the LMF, or two or more of the above. Consequently, for example, it is possible to reduce the amount of signaling between the base station and the LMF.

As another example regarding the notification of the information from the base station to the LMF, the LMF may request the base station to notify the LMF of the information. The base station may notify the LMF of the information in response to the request.

The LMF may request the base station to start the notification of the information, or to stop the notification of the information. In response to the request, the base station may start the notification of the information, or may stop the notification of the information. Consequently, for example, it is possible to avoid complexity in the communication system.

As another example regarding the request, the LMF may request the base station to notify the LMF of a plurality of pieces of the information. The notification of the plurality of pieces of the information from the base station to the LMF may be performed at a time. Consequently, for example, it is possible to reduce the amount of signaling between the base station and the LMF. As another example, the notification from the base station to the LMF may be performed in a plurality of installments. The notification may be periodically performed.

The following (A) to (J) will be disclosed as examples of information to be included in the request from the LMF to the base station.
(A) Start request.
(B) Stop request.
(C) Information specifying a time.
(D) Information about a period of notification.
(E) Information about the number of times the notification is to be performed.
(F) Information about the number of pieces of information included in the notification. For example, the number of pieces of information on a combination of the location and time of the base station included in the notification to be performed once.
(G) Information about a positioning method.
(H) Information about the content of the notification.
(I) Information about a positioning requirement.
(J) A combination of (A) to (I) described above.

The base station may start notification to the LMF by using the information about (A) described above. Consequently, for example, it is possible to avoid complexity in design regarding a process for starting the notification in the base station.

The base station may stop notification to the LMF by using the information about (B) described above. Consequently, for example, it is possible to avoid complexity in design regarding a process for stopping the notification in the base station.

The information indicated in (C) described above may be, for example, information indicating a range of time information to be notified from the base station to the LMF. The time information may be, for example, the above-described information disclosed as (4) of the information to be notified by the base station to the LMF. The information indicated in (C) described above may include information indicating a start point of the range of the time information, information indicating an end point thereof, or information indicating a period of the range. The base station may determine information to be included in the notification to the LMF by using the information indicated in (C) described above. Consequently, for example, it is possible to prevent information in the notification from the base station to the LMF from being excessive or insufficient.

The information indicated in (D) described above may include, for example, a period of the notification from the base station to the LMF, information on offset for the period, or both of the above. The offset may be given in, for example, a remainder of a time when the base station transmits the notification divided by a period, or information on a certain transmission time. The offset may be given in information using a time, or in information using a radio frame number, a subframe number, a slot number, and/or a symbol number. The base station may perform the notification to the LMF by using the information. Consequently, for example, it is possible for the LMF to track a change in the location of the base station, and as a result, the location of the UE can be promptly calculated.

The information indicated in (E) described above may be, for example, one time or a plurality of times. For example, by the LMF setting a value of (E) described above to be small, it is possible to reduce the amount of signaling between the base station and the LMF. As another example, by the LMF setting the value of (E) described above to be large, it is possible to calculate the location of the base station with high accuracy, and as a result, the accuracy of the positioning of the location of the UE can be improved.

The information indicated in (F) described above may be, for example, the number of pieces of information about the location included in one notification from the base station to the LMF. The value of the information may be one, or may be two or more. For example, by the LMF setting a value of (F) described above to be small, it is possible to reduce the amount of processing performed by the base station. As another example, by the LMF setting the value of (F) described above to be large, it is possible to calculate the location of the base station at a certain time with high accuracy, and as a result, the accuracy of the positioning of the location of the UE can be improved.

The information indicated in (G) described above may include, for example, information about a positioning method the LMF requests from the base station. The information about a positioning method may be, for example, information similar to the above-described information disclosed as (7) of the information to be notified by the base station to the LMF. Consequently, for example, it is possible to improve flexibility in the communication system.

The information indicated in (H) described above may indicate, for example, the above-described (1) to (12) disclosed as examples of the information to be notified by the base station to the LMF. The base station may derive information to be notified to the LMF by using the information of (H) described above. Consequently, for example, it is possible to reduce the amount of signaling between the base station and the LMF, and to decrease the amount of processing performed by the base station.

The information indicated in (I) described above may be, for example, information about positioning latency or information about positioning accuracy. The base station may determine, for example, whether to perform the notification to the LMF again by using the information about positioning accuracy. For example, in a case where the amount of movement of the base station from the location thereof at a time of the previous notification is a predetermined value or more, the base station may perform the notification to the LMF again. The predetermined value may be determined by using, for example, an accuracy requirement included in (I) described above. Consequently, for example, it is possible to improve the accuracy of the positioning of the UE.

The information from the LMF to the base station may be included in signaling of an assistance data request (e.g., TRP information request) from the LMF to the gNB disclosed in Non Patent Literature 24 (3GPP TS38.305). Consequently, for example, it is possible to reduce the amount of signaling between the base station and the LMF.

As another example, the information may be included in signaling of a UL SRS configuration request (e.g., positioning information request) disclosed in Non Patent Literature 24 (3GPP TS38.305). Consequently, for example, an effect similar to that described above is obtained.

As another example, the information may be included in signaling of a positioning signal transmission/reception request (e.g., measurement request) disclosed in Non Patent Literature 24 (3GPP TS38.305). Consequently, for example, an effect similar to that described above is obtained.

As another example, new signaling for transmitting the information may be provided. Consequently, for example, it is possible to provide backward compatibility in the communication system.

Next, a UE positioning method in the communication system according to the first embodiment will be described.

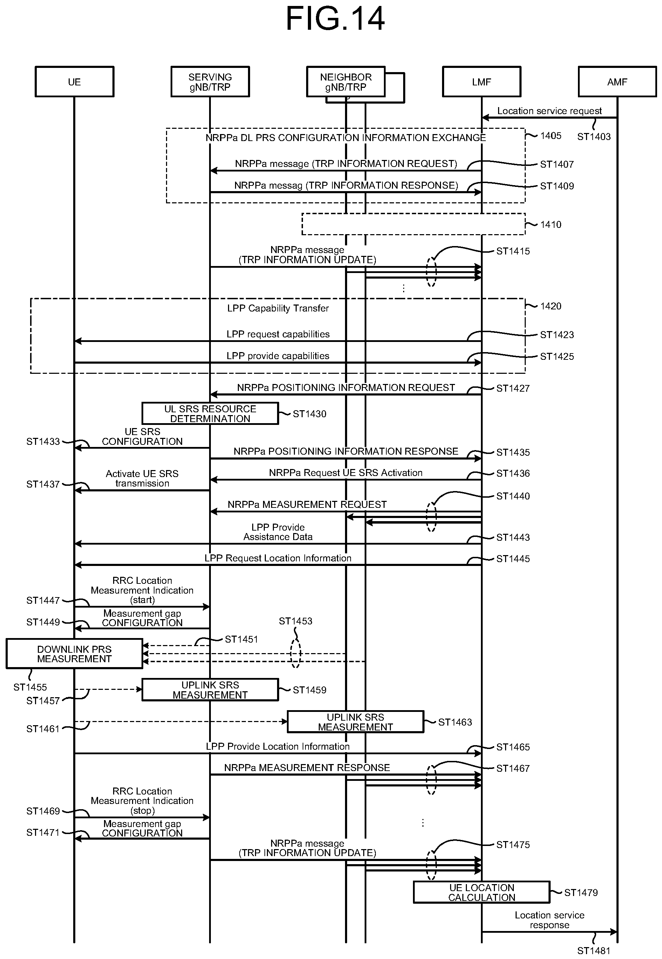

FIG. 14 is a sequence diagram illustrating an example of a positioning sequence of a UE in which each base station notifies an LMF of a combination of the location and time information of the base station. FIG. 14 illustrates a case where multi-RTT is used as a positioning method. In the example of the positioning sequence illustrated in FIG. 14, a case is illustrated where each base station periodically notifies the LMF of the information on the combination of the location and the time information of the base station. FIG. 14 illustrates an example of a sequence in a case where a higher-level device than the base stations has a positioning function of deriving the location of the UE, that is, an example of a sequence in a case where the higher-level device operates as a positioning device.

In step ST1403 illustrated in FIG. 14, an AMF requests a positioning service from the LMF. The request may be, for example, a request about the measurement of the location of the UE. The AMF may make the request in response to a request from a location service (LCS) client existing outside the 5G system, or in response to a request from the UE. Alternatively, the AMF may make the request voluntarily.

The request from the LCS existing outside the 5G system, the UE, and/or the AMF may include a request for information about the location of the base station to which the UE is connected. The AMF may request information about the location of the base station from the LMF. Consequently, for example, it is possible for the LCS to promptly know the location of the base station to which the UE is connected, and processes in location information services can be promptly executed.

A network data analytics function (NWDAF) disclosed in Non Patent Literature 21 (3GPP TS23.501) may request information about the location of the UE and/or the base station from the LMF. The request may be made via the AMF. The AMF may perform the process of step ST1403 in response to the request from the NWDAF. Consequently, for example, it is possible to process location information in the NWDAF, and as a result, the amount of processing of another device in a communication network device can be reduced.

In procedure 1405 illustrated in FIG. 14, downlink PRS configuration information is exchanged between the LMF and a serving base station. Signaling in procedure 1405 may be, for example, NRPPa signaling. In step ST1407, the LMF requests TRP information from the serving base station. In step ST1409, the serving base station notifies the LMF of the TRP information. Step ST1409 may include information about an identifier of a cell, a DU, and/or a TRP (hereinafter, sometimes referred to as a cell or the like) of the serving base station, information about timing of the cell or the like (e.g., frame timing), information about PRS configuration of the cell or the like, information about an SS block or an SS burst of the cell or the like (e.g., information about frequency and/or time resources), information about a PRS transmission direction from the cell or the like, or information about the location of the cell or the like.

In procedure 1410 illustrated in FIG. 14, processes similar to those in procedure 1405 are performed between the LMF and each neighbor base station.

In step ST1415 illustrated in FIG. 14, the serving base station and/or the neighbor base stations each notify the LMF of the location and/or time information of the base station. For example, NRPPa signaling may be used for the notification in step ST1415. The information transmitted in step ST1415 may include the above (1) to (12) disclosed as examples of information to be notified by the base station to the LMF. The transmission in step ST1415 may be repeatedly performed. The LMF acquires information about the location of each of the serving base station and/or the neighbor base stations by using step ST1415. In the example illustrated in FIG. 14, the serving base station and/or the neighbor base stations start the notification in step ST1415 in response to procedure 1405 and/or procedure 1410.

In procedure 1420 illustrated in FIG. 14, request for capability regarding positioning and notification of the capability regarding positioning are performed between the LMF and the UE. Signaling in procedure 1420 may be, for example, LPP signaling. In step ST1423, the LMF requests the capability regarding positioning from the UE. In step ST1425, the UE notifies the LMF of the capability regarding positioning.

In step ST1427 illustrated in FIG. 14, the LMF requests positioning information from the serving base station. The request may include a request for configuration of an uplink positioning signal, for example, an uplink SRS. In step ST1430, the serving base station determines an uplink SRS resource of the UE. In step ST1433, the serving base station configures the UE with the uplink SRS. In step ST1435, the serving base station transmits, to the LMF, a response to the positioning information request. The response may include information about the SRS configuration of the UE, for example, time and/or frequency resources of the SRS.

In step ST1436 illustrated in FIG. 14, the LMF requests activation of UE SRS transmission from the serving base station. In step ST1437, the serving base station requests activation of SRS transmission from the UE. The UE starts the transmission of the SRS in response to step ST1437.

In step ST1440 illustrated in FIG. 14, the LMF makes a positioning signal measurement request to the serving base station and/or the neighbor base stations. For example, NRPPa signaling may be used for the request. For example, NRPPa MEASUREMENT REQUEST disclosed in Non Patent Literature 24 (3GPP TS38.305) may be used for the NRPPa signaling.

In step ST1443 illustrated in FIG. 14, the LMF notifies the UE of information to be used for positioning. The information may be, for example, information about a downlink PRS of the serving base station and/or the neighbor base stations, information about a frame timing, or a combination of the above. For example, LPP signaling may be used for the notification of the information. The LPP signaling may be, for example, LPP Provide Assistance Data disclosed in Non Patent Literature 24 (3GPP TS38.305).

In step ST1445 illustrated in FIG. 14, the LMF requests positioning from the UE. For example, LPP signaling may be used for the request. The LPP signaling may be, for example, LPP Request Location Information disclosed in Non Patent Literature 24 (3GPP TS38.305). The UE performs a PRS measurement process in accordance with the request.

In step ST1447 illustrated in FIG. 14, the UE requests a measurement gap configuration for transmission and reception of positioning signals from the serving base station. For the request, RRC signaling, for example, RRC Location Measurement Indication disclosed in Non Patent Literature 24 (3GPP TS38.305) may be used. The request may include information about the start of the measurement gap for positioning. In step ST1449, the serving base station instructs the UE to configure the measurement gap. The UE configures the measurement gap in accordance with the instruction in step ST1449.

In steps ST1451 and ST1453 illustrated in FIG. 14, the serving base station and the neighbor base stations each transmit the PRS to the UE. In step ST1455, the UE performs a reception process of the PRS from each of the serving base station and/or the neighbor base stations. The reception process includes a PRS measurement process.

In step ST1457 illustrated in FIG. 14, the UE transmits the SRS to the serving base station. In step ST1459, the serving base station performs a reception process of the SRS from the UE. The reception process includes an SRS measurement process.

In step ST1461 illustrated in FIG. 14, the UE transmits the SRS to the neighbor base stations. In step ST1463, the neighbor base stations each perform a reception process of the SRS from the UE. The reception process includes an SRS measurement process.

In step ST1465 illustrated in FIG. 14, the UE notifies the LMF of information about a result of reception of the positioning signal. For example, LPP signaling may be used for the notification. The LPP signaling may be, for example, LPP Provide Location Information disclosed in Non Patent Literature 24 (3GPP TS38.305).

In step ST1467 illustrated in FIG. 14, the serving base station and/or the neighbor base stations each notify the LMF of information about a result of reception of the positioning signal. For example, NRPPa signaling may be used for the notification. For example, NRPPa MEASUREMENT RESPONSE disclosed in Non Patent Literature 24 (3GPP TS38.305) may be used for the NRPPa signaling.

In step ST1469 illustrated in FIG. 14, the UE requests the serving base station to change the measurement gap. The request may be a request for returning the measurement gap configuration to that before positioning. For the request, RRC signaling, for example, RRC Location Measurement Indication disclosed in Non Patent Literature 24 (3GPP TS38.305) may be used. The request may include information about the stop of the measurement gap for positioning. In step ST1471, the serving base station instructs the UE to configure the measurement gap. The UE changes the measurement gap configuration in accordance with the instruction in step ST1471.

In step ST1475 illustrated in FIG. 14, the serving base station and/or the neighbor base stations each transmit, to the LMF, the location and/or time information of the base station. The information transmitted in step ST1475 may be similar to that in step ST1415. The LMF acquires information about the location of each of the serving base station and/or the neighbor base stations by using step ST1475. In the example illustrated in FIG. 14, the serving base station and/or the neighbor base stations may each terminate the periodic transmission indicated in step ST1475 in response to the notification of the information about the result of reception of the positioning signal indicated in step ST1467. For example, the signaling in step ST1467 transmitted after step ST1467 may be the final transmission process. Consequently, for example, it is possible to reduce the amount of signaling between each base station and the LMF.

In step ST1479 illustrated in FIG. 14, the LMF calculates the location of the UE. For the calculation of the location of the UE performed by the LMF, information in steps ST1415, ST1465, ST1467, and/or ST1475 may be used.

In step ST1481 illustrated in FIG. 14, the LMF notifies the AMF of information about the calculated location of the UE. The AMF may notify the UE of the information, may notify an LCS outside the 5G system of the information, or may use the information in the AMF.

Step ST1481 illustrated in FIG. 14 may include information about the location and/or time of each base station. The AMF may notify the UE of the information about the location and/or time of each base station, may notify the LCS outside the 5G system of the information, or may use the information in the AMF. Consequently, for example, it is possible for the AMF to appropriately specify RNA and/or the tracking area for a moving base station.

The LMF may notify the NWDAF of information about the location of the UE and/or each base station. The notification may be performed via the AMF. The LMF may perform the notification to the NWDAF in a case where the NWDAF requests the information. The NWDAF may process data related to location information using the information. Consequently, for example, it is possible to reduce the amount of data processing of another device in the communication network device.

Although FIG. 14 illustrates an example in which the serving base station and/or the neighbor base stations start the notification in step ST1415 in response to procedure 1405 and/or procedure 1410, the notification may be started in response to another process, for example, the positioning signal measurement request indicated in step ST1440. Consequently, for example, the necessity of the process of step ST1415 before the positioning signal measurement request is eliminated, and as a result, the amount of signaling between the LMF and each base station can be reduced.

In FIG. 14, the process of step ST1415 and/or step ST1475 performed by the serving base station and/or the neighbor base stations on the LMF may be performed by the respective base stations simultaneously or at different timings. By performing the process at different timings, for example, a signaling load in an interface between the LMF and each base station can be leveled.

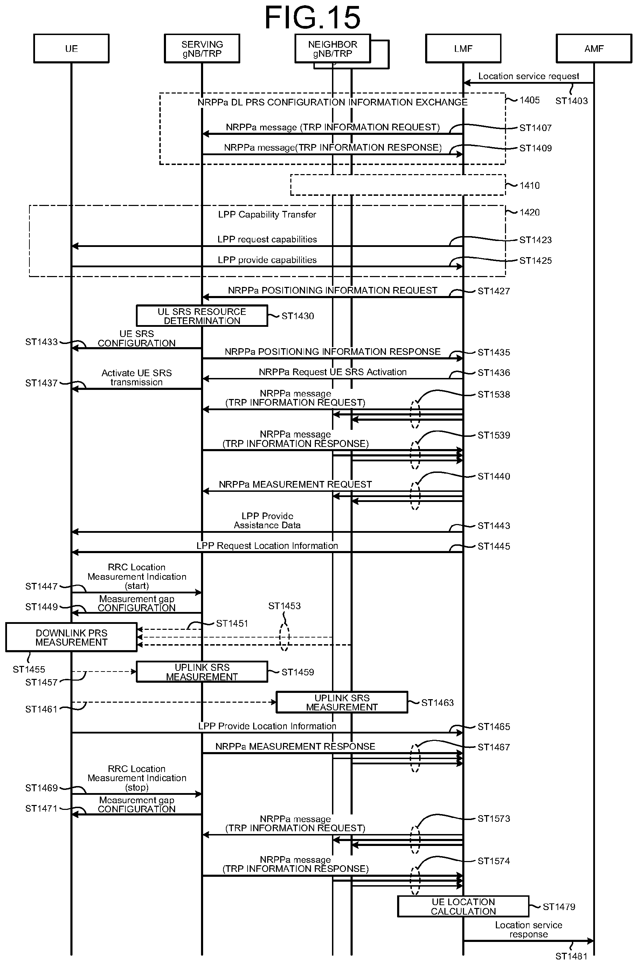

FIG. 15 is a sequence diagram illustrating another example of the positioning sequence of the UE in which each base station notifies the LMF of a combination of the location and time information of the base station. FIG. 15 illustrates a case where multi-RTT is used as a positioning method. In FIG. 15, an example is illustrated in which each base station notifies the LMF of information on the combination of the location and the time information of the base station in response to a request from the LMF. In FIG. 15, processes similar to those in FIG. 14 are denoted by the same step numbers as those therein, and a common description will be omitted.

Steps ST1403 to ST1437 illustrated in FIG. 15 are similar to those in FIG. 14.

In step ST1538 illustrated in FIG. 15, the LMF requests, from the serving base station and/or the neighbor base stations, information about the location and/or time of the base station. NRPPa signaling may be used for the request. The request may include the above (A) to (J) disclosed as information included in the request from the LMF to each base station.

In step ST1539 illustrated in FIG. 15, the serving base station and/or the neighbor base stations each notify the LMF of the location and/or time information of the base station. For example, NRPPa signaling may be used for the notification in step ST1539. The information transmitted in step ST1539 may include the above (1) to (12) disclosed as examples of information to be notified by each base station to the LMF. The LMF acquires information about the location of each of the serving base station and/or the neighbor base stations by using step ST1539.

Steps ST1440 to ST1471 in FIG. 15 are similar to those in FIG. 14.

In FIG. 15, steps ST1573 and ST1574 are similar to steps ST1538 and ST1539, respectively.

Steps ST1479 to ST1481 in FIG. 15 are similar to those in FIG. 14.

The UE may notify the LMF of information in which a result of reception of a downlink positioning signal and time information are combined. The time information may be, for example, information on a time of reception of the downlink positioning signal by the UE. The UE may transmit a plurality of pieces of the information thus combined. The notification may be performed via the base station and/or the AMF. The LMF may derive the location of the UE by using the information. Consequently, for example, it is possible to improve the accuracy of the positioning of the UE.

The LMF may calculate the location of the UE by using the information of the combination provided from the base station. For example, the LMF may calculate the location of the base station at time of transmission and reception of positioning signals between the UE and the base station. The LMF may use information about the speed of the base station or information about the acceleration of the base station to calculate the location of the base station. As another example, the LMF may obtain the speed and/or acceleration of the base station. The LMF may calculate the location of the UE by using the information about the location, speed, and/or acceleration of the base station calculated above. Consequently, for example, it is possible to improve the accuracy of the location calculation of the UE.

The LMF may notify the AMF of a result of the calculation of the location of the UE. The AMF may notify a device having a location service function of the information. The device may be, for example, the UE or a device existing in a network outside the 5G network. Consequently, for example, it is possible to perform a process using UE location information in a system including the communication system.

The base station may perform signaling to the LMF via the AMF. The LMF may perform signaling to the base station via the AMF. Consequently, for example, it is possible to avoid complexity in an interface between the base station and the LMF.

According to the first embodiment, it is possible to improve the accuracy of positioning of the UE in a case where the base station moves.

### First Modification of First Embodiment.

In the first embodiment described above, the positioning method of the UE in a case where the LMF is present in the 5GC has been described. However, the method disclosed in the first embodiment may be used in a case where the base station includes the LMF. The LMF included in the serving base station may acquire information about the location and time of the serving base station. Each of the neighbor base stations may notify the serving base station of information about the location and time of the neighbor base station.

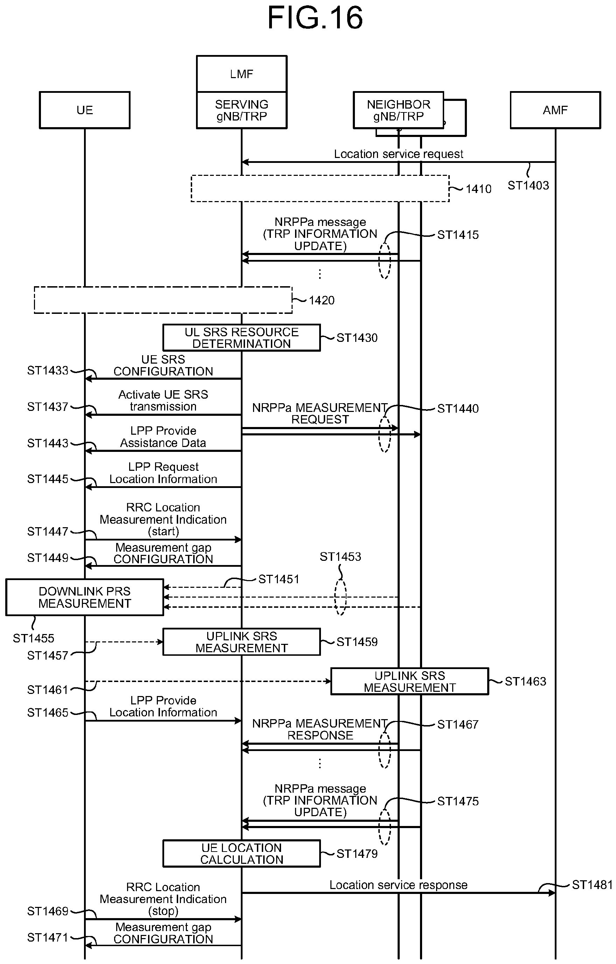

FIG. 16 is a sequence diagram illustrating an operation of notifying, from each of neighbor base stations to a serving base station, a combination of the location and time information of the neighbor base station in a positioning sequence of a UE in a case where a base station includes an LMF. FIG. 16 illustrates a case where multi-RTT is used as a positioning method. FIG. 16 illustrates an example of a sequence in a case where the base station has a positioning function of deriving the location of the UE, that is, an example of a sequence in a case where the base station operates as a positioning device. In the example of the positioning sequence illustrated in FIG. 16, the neighbor base stations each periodically notify the serving base station of the information. In FIG. 16, processes similar to those in FIG. 14 are denoted by the same step numbers as those therein, and descriptions of details of the processes will be omitted.

In FIG. 16, processes with the same step numbers as those in FIG. 14 are processes in which the LMF in each step in FIG. 14 is replaced with the serving base station.

In FIG. 16, step ST1403 may be performed by the UE. For example, the UE may request a positioning service from the serving base station. Consequently, for example, it is possible to promptly execute the request for the positioning service to the serving base station including the LMF. The UE may notify the AMF that the process of step ST1403 has been performed. The notification to the AMF may be performed by the serving base station. Consequently, for example, it is possible for the AMF to know that the request for the positioning service has been made to the LMF, and as a result, the positioning service can be prevented from being redundantly performed.

In FIG. 16, the serving base station may perform step ST1481 on the UE. The operation may be performed, for example, in a case where the UE requests the positioning service. Consequently, for example, it is possible for the serving base station including the LMF to promptly notify the UE of a positioning result. The serving base station may notify the AMF that the process of step ST1481 has been performed. Consequently, for example, it is possible for the AMF to know that positioning has been completed. As a result, it is possible to prevent occurrence of unnecessary processing wait time in a process related to the positioning.

As another example, each of the neighbor base stations may notify the serving base station of the combination of the location and the time information of the neighbor base station in response to a request from the serving base station. For example, in steps ST1538, ST1539, ST1573, and ST1574 in FIG. 15, processes may be performed in which the LMF is replaced with the serving base station. Consequently, for example, it is possible to reduce the amount of signaling between the serving base station and the neighbor base stations.

According to the first modification, even in a case where the serving base station includes the LMF and the base station moves, the location of the base station at a certain time can be calculated, and as a result, the accuracy of the positioning of the UE can be improved.

### Second Modification of First Embodiment.

In the first embodiment described above, the positioning method of the UE in a case where the LMF is present in the 5GC has been described. However, the method disclosed in the first embodiment may be used in a case where the UE includes the LMF. The LMF included in the UE may acquire information about the location and time of each of the serving base station and/or the neighbor base stations. Each of the neighbor base stations may notify the UE of information about the location and time of the neighbor base station via the serving base station. The serving base station may notify the UE of the information on the serving base station and/or the neighbor base stations.

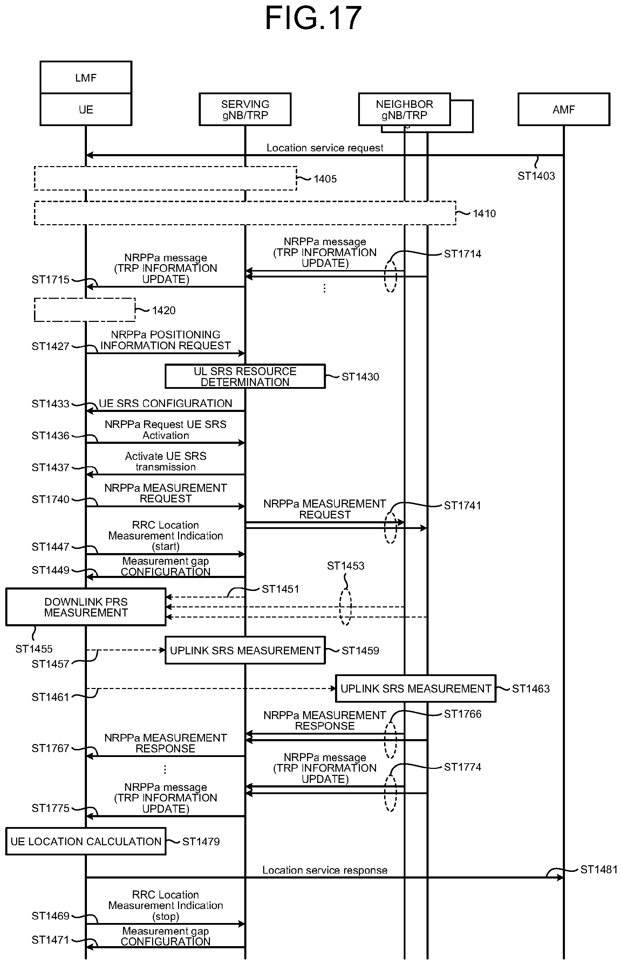

FIG. 17 is a sequence diagram illustrating an operation of notifying, from a serving base station to a UE, a combination of the location and time information of each of the serving base station and neighbor base stations in a positioning sequence of the UE in a case where the UE includes an LMF. FIG. 17 illustrates a case where multi-RTT is used as a positioning method. FIG. 17 illustrates an example of a sequence in a case where the UE has a positioning function of deriving the location of the UE, that is, an example of a sequence in a case where the UE operates as a positioning device. In the example of the positioning sequence illustrated in FIG. 17, the serving base station periodically notifies the UE of the information. In FIG. 17, processes similar to those in FIG. 14 are denoted by the same step numbers as those therein, and descriptions of details of the processes will be omitted.

In FIG. 17, processes with the same step numbers as those in FIG. 14 are processes in which the LMF in each step in FIG. 14 is replaced with the UE.

In step ST1714 illustrated in FIG. 17, each of the neighbor base stations notifies the serving base station of the location and/or time information of the neighbor base station. For example, NRPPa signaling may be used for the notification in step ST1714. The information transmitted in step ST1714 may include the above (1) to (12) disclosed as examples of information to be notified by the base station to the LMF. The transmission in step ST1714 may be repeatedly performed.

In step ST1715 illustrated in FIG. 17, the serving base station notifies the UE of the location and/or time information of each of the serving base station and/or the neighbor base stations. For example, NRPPa signaling may be used for the notification in step ST1715. The information transmitted in step ST1715 may include the above (1) to (12) disclosed as examples of information to be notified by the base station to the LMF. Step ST1715 may be repeatedly performed. The transmission in step ST1715 may be performed in response to step ST1714, or may be performed independently of step ST1714.

Steps ST1774 and ST1775 illustrated in FIG. 17 are similar to steps ST1714 and ST1715, respectively.

In FIG. 17, step ST1403 may be performed inside the UE. For example, the UE need not transmit step ST1403 to another device. The operation may be performed, for example, in a case where the UE requests the positioning service. Consequently, for example, it is possible for the UE to promptly execute a request for the positioning service of the UE including the LMF. The UE may notify the AMF that the process of step ST1403 has been performed. Consequently, for example, it is possible for the AMF to know that the request for the positioning service has been made to the LMF, and as a result, the positioning service can be prevented from being redundantly performed.

In FIG. 17, the UE may perform step ST1481 inside the UE. For example, the UE need not transmit step ST1481 to another device. The operation may be performed, for example, in a case where the UE requests the positioning service. Consequently, for example, it is possible for the UE including the LMF to promptly notify the UE of a positioning result. The UE may notify the AMF that the process of step ST1481 has been performed. Consequently, for example, it is possible for the AMF to know that positioning has been completed. As a result, it is possible to prevent occurrence of unnecessary processing wait time in a process related to the positioning.

As another example, notification from each neighbor base station to the serving base station and/or from the serving base station to the UE of the combination of the location and the time information of the base station that performs the notification and/or the neighbor base stations may be performed in response to a request from the UE. In addition, notification from each neighbor base station to the serving base station of the combination of the location and the time information of the base station that performs the notification and/or the neighbor base stations may be performed in response to a request from the UE. The UE may request the notification of the combination from the serving base station. The serving base station may request the notification of the combination from the neighbor base stations. The neighbor base stations may perform the notification of the combination regarding the neighbor base stations in response to the request from the serving base station. The serving base station may notify the UE of the combination regarding the serving base station and/or the neighbor base stations in response to the notification from the neighboring base stations. Consequently, for example, it is possible to reduce the amount of signaling between the UE and the serving base station and between the serving base station and each neighbor base station.

According to the second modification, even in a case where the serving base station includes the UE and the base station moves, the location of the base station at a certain time can be calculated, and as a result, the accuracy of the positioning of the UE can be improved.

### Second Embodiment.

As described above, the 5G base station can be configured to be divided into the central unit (CU) and the distributed unit (DU). In the present embodiment, a case will be described where positioning of a UE is performed by using a base station having a configuration in which the CU and the DU are separated. In the positioning, positioning signals may be transmitted and received between the UE and the DU. The CU may notify an LMF of information about the location of the DU.

In the above-described configuration, the following problem occurs. That is, the CU needs to know the location of the DU. However, a method for the CU to acquire the location of the DU is not disclosed in the standards and the like already established so far including Non Patent Literatures 1 to 33 described above. Therefore, for example, in a case where the DU moves, the CU cannot know the location of the DU, and there arises a problem that accuracy in positioning of the UE is deteriorated or that the positioning cannot be performed.

Therefore, the present embodiment discloses a method for solving the above problem. That is, in a communication system according to the present embodiment, the DU notifies the CU of information about the location of the DU. The information may include information about time information. The time information may be, for example, information about a time of acquisition by the DU of location information of the DU.

The notification from the DU to the CU may be performed by using F1 signaling. The F1 signaling may be, for example, signaling of F1 SETUP REQUEST or signaling of GNB-DU CONFIGUTATION UPDATE described in Non Patent Literature 31 (3GPP TS38.473). Consequently, for example, it is possible to reduce the number of times of signaling from the DU to the CU. As another example, new F1 signaling may be provided. Consequently, for example, the necessity of changing the existing F1 signaling is eliminated, and as a result, it is possible to avoid complexity in design of the communication system.

As another example regarding the signaling used for the notification, the notification may be performed by using RRC signaling. For example, in a base station in which integrated access and backhaul (see Non Patent Literature 16 (3GPP TS38.300)) is employed, the notification may be performed by using RRC signaling. RRC signaling for the notification may be provided, or the notification may be encapsulated in the RRC signaling and transmitted. For example, the notification may be performed by using signaling of an F1 interface encapsulated in RRC signaling, or by using LPP signaling and/or NRPPa signaling using RRC signaling. Consequently, for example, it is possible to perform the notification from the DU to the CU, even in a case where the CU and the DU are connected by radio.

As another example regarding the signaling used for the notification, the notification may be performed by using LPP signaling or by using NRPPa signaling. For example, the notification may be performed by using TRP INFORMATION RESPONSE disclosed in Non Patent Literature 24 (3GPP TS38.305). The CU may transfer the information to the LMF.

The DU may terminate an LPP protocol, or may terminate an NRPPa protocol. Consequently, for example, it is possible to promptly notify the LMF of information about the location of the DU.

The following (a) to (f) will be disclosed as examples of information to be used for the notification from the DU to the CU.
(a) Information for identifying the DU.
(b) Information about the location of the DU.
(c) Information about time.
(d) Information about a positioning method.
(e) Information about TRP, the information being similar to (a) to (c) described above, or a combination thereof.
(f) A combination of (a) to (e) described above.

The information about (a) described above may be, for example, an identifier of the DU. The identifier may be, for example, a DU-ID. The CU may identify the DU that has performed the notification by using the information. Consequently, for example, it is possible for the CU to easily identify the DU base station that has performed the notification, and as a result, a positioning procedure in the communication system can be promptly executed.

The information about (b) described above may be information similar to (2) disclosed as an example of information to be notified by the base station to the LMF in the first embodiment. For example, the information may include information about the location of the DU, or information about the accuracy of the location of the DU. Consequently, for example, the LMF can derive accuracy in the location calculation of the UE.

The information about (c) described above may be information similar to (4) disclosed as an example of information to be notified by the base station to the LMF in the first embodiment. For example, information about a time of derivation of the location of the DU may be included, or information about the accuracy of the time may be included. The LMF may derive the location of the UE at a certain time by using the information. Consequently, for example, the LMF can improve the accuracy of the location derivation of the UE.

The information about (d) described above may be information similar to (7) disclosed as an example of information to be notified by the base station to the LMF in the first embodiment. The LMF may acquire information about the positioning method of the UE by using the information. Consequently, for example, it is possible for the LMF to promptly acquire the information about the positioning method of the UE, and as a result, the LMF can promptly perform positioning of the UE.

The information about (e) described above may be, for example, information obtained by replacing the DU with the TRP in (a) to (c) described above. The number of pieces of the information of (e) described above may be one, or two or more pieces, for example, as many pieces of the information as the number of TRPs, may be included. Consequently, for example, even in a communication system using a base station including the TRP, it is possible to improve the accuracy of the positioning of the UE.

The CU may request the notification of the information about the location of the DU from the DU. The request may be made by F1 signaling, RRC signaling, LPP signaling, or NRPPa signaling. For example, the request may be made by using TRP INFORMATION REQUEST disclosed in Non Patent Literature 24 (3GPP TS38.305), or by using new signaling. The CU may terminate the LPP protocol, or may terminate the NRPPa protocol. Consequently, for example, it is possible to promptly notify the LMF of information about the location of the DU.

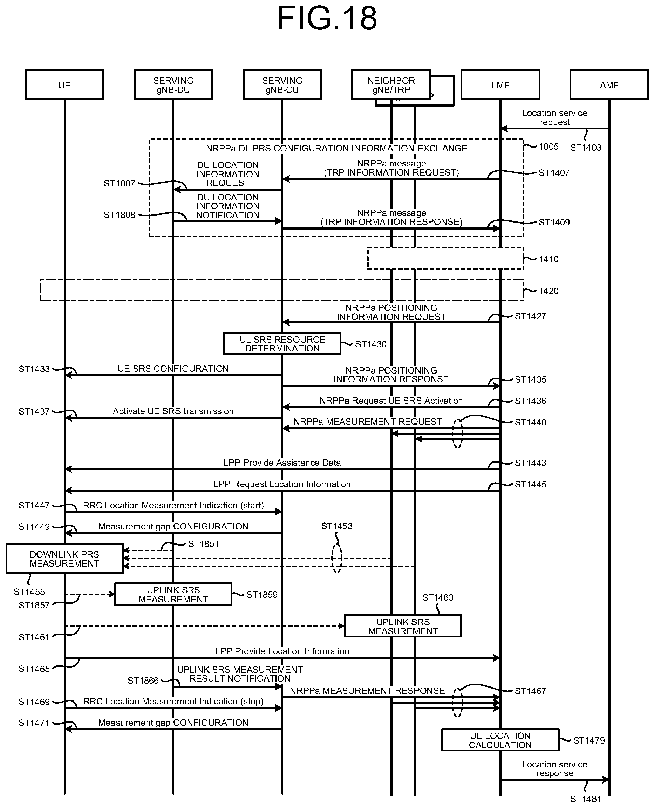

FIG. 18 is a sequence diagram illustrating an example of a positioning sequence of a UE including a process of notifying, from a DU to a CU, the location of the DU. FIG. 18 illustrates a case where multi-RTT is used as a positioning method. In FIG. 18, processes similar to those in FIG. 14 are denoted by the same step numbers as those therein, and a common description will be omitted.

In FIG. 18, processes with the same step numbers as those in FIG. 14 are processes in which the base station in each step in FIG. 14 is replaced with the CU.

In procedure 1805 illustrated in FIG. 18, processes similar to those in procedure 1405 in FIG. 14 are performed.

Step ST1407 illustrated in FIG. 18 is similar to that in FIG. 14.

In step ST1807 illustrated in FIG. 18, the CU requests information about the location of the DU from the DU. Here, the CU is a CU of the serving base station (serving gNB-CU), and the DU is a DU of the serving base station (serving gNB-DU). The same applies to the following description. The request may be made by F1 signaling, RRC signaling, LPP signaling, or NRPPa signaling. For example, the request may be made by using TRP INFORMATION REQUEST disclosed in Non Patent Literature 24 (3GPP TS38.305), or by using new signaling.

In step ST1808 illustrated in FIG. 18, the DU notifies the CU of information about the location of the DU. The information may include the above information of (a) to (f) disclosed as examples of the information to be used for the notification from the DU to the CU. The signaling in step ST1808 may be performed by using F1 signaling, RRC signaling, LPP signaling, or NRPPa signaling.

Step ST1409 illustrated in FIG. 18 is similar to that in FIG. 14.

In step ST1851 illustrated in FIG. 18, the DU transmits the PRS to the UE.

In step ST1857 illustrated in FIG. 18, the UE transmits the SRS to the DU. In step ST1859, the DU performs an SRS measurement process.

In step ST1866 illustrated in FIG. 18, the DU notifies the CU of information about a measurement result of an uplink SRS. The CU may include the notification of the information received in step ST1866 in the notification of the measurement result to the LMF illustrated in step ST1467. In the notification of the measurement result to the LMF, the CU may also notify the LMF of the information about the location of the DU the notification of which is received in step ST1808 described above.

The sequence illustrated in FIG. 18 may be applied to a case where the neighbor base stations each have a configuration divided into the CU and the DU. In that case, the DUs of the neighbor base stations may perform the process of step ST1808. Consequently, for example, even in a case where the neighbor base stations are each divided into the CU and the DU, it is possible to measure the location of the DU of the serving base station.

In the sequence illustrated in FIG. 18, a plurality of DUs of the serving base station may be used. In the above description, some DUs may be used to transmit and receive signaling, data, and/or positioning signals to and from the UE, and other DUs may transmit and receive positioning signals to and from the UE. In that case, the neighbor base stations may or need not be used for positioning. With the use of the neighbor base stations, for example, it is possible to improve the accuracy of the positioning of the UE. With no use of the neighbor base stations, for example, it is possible to reduce the amount of signaling between the base station and the LMF.

The method disclosed in the present embodiment may be used for notification of information about the location of the TRP. For example, the DU may notify the CU of information about the location of the TRP thereunder. The information may include information about time. The CU may transfer the information to the LMF. The LMF may calculate the location of the TRP by using the information. Consequently, for example, even in positioning using a base station including the TRP, it is possible to improve the accuracy of the positioning of the UE.

According to the second embodiment, it is possible to notify, from the DU to the CU, the information about the location of the DU, and as a result, the accuracy of the positioning of the UE can be improved in the LMF.

In the present embodiment, the example has been described in which the higher-level device includes the LMF, but the base station may include the LMF, or the UE may include the LMF.

### Third Embodiment.

The 5G base station can support integrated access and backhaul (IAB) (see Non Patent Literature 16 (3GPP TS38.300)). That is, positioning of a UE may be performed by using a base station that supports IAB (hereinafter, sometimes referred to as an IAB base station). However, how the positioning using the IAB base station is performed is not disclosed in the standards and the like already established so far including Non Patent Literatures 1 to 33 described above. Therefore, there arises a problem that positioning using the IAB base station cannot be performed.

Therefore, the third embodiment discloses a method for solving the above problem.

That is, in a communication system to which IAB is applied, an IAB-node (a base station that operates as an IAB-node) notifies an IAB-donor CU (a CU of a base station that operates as an IAB-donor) of information about the location of the IAB-node. The notification may be performed via an IAB-parent node and/or an IAB-donor DU.

F1 signaling may be used for the notification. The notification using the F1 signaling and the notification method disclosed in the second embodiment may be used in combination. Consequently, for example, it is possible to use the same I/F regarding the notification of the information about the location of the IAB-node regardless of whether wired communication or radio communication is used in a communication path between the CU and the DU, and as a result, complexity in the communication system can be avoided.

The F1 signaling may be encapsulated in RRC signaling, or may be encapsulated in signaling in a backhaul adaptation protocol (BAP) sublayer disclosed in Non Patent Literature 16 (3GPP TS38.300).

As another example, RRC signaling may be used for the notification. Existing RRC signaling may be used, or RRC signaling used for the notification of the information about the location of the IAB-node may be provided. Consequently, for example, it is possible for the IAB-node to promptly notify the IAB-donor CU of the location of the IAB-node.

The information included in the notification from the IAB-node to the IAB-donor CU may be information obtained by replacing the DU with the IAB-node for the above information (a) to (f) used for the notification from the DU to the CU disclosed in the second embodiment. Consequently, for example, it is possible to use the same I/F regarding the notification of the information about the location of the IAB-node regardless of whether wired communication or radio communication is used in a communication path between the CU and the DU, and as a result, complexity in the communication system can be avoided.

Positioning of the IAB-node may be performed. The positioning may be performed by using, for example, transmission and reception of positioning signals between the IAB-node and the IAB-donor DU and between the IAB-node and each neighbor base station. The positioning of the IAB-node by transmission and reception of positioning signals may be performed by using, for example, a method disclosed in Non Patent Literature 24 (3GPP TS38.305), or by using the methods disclosed in the first embodiment to the second modification of the first embodiment. The methods described above may be performed by replacing the UE with the IAB-node. The methods disclosed in the first embodiment to the second modification of the first embodiment may be used, for example, in a case where the IAB-donor DU moves. Consequently, for example, it is possible to calculate the location of the IAB-donor DU at a certain time with high accuracy, and as a result, the accuracy of the location calculation of the IAB-node can be improved.

The IAB-node may be capable of terminating NAS signaling, LPP signaling, or NRPPa signaling. Consequently, for example, it is possible to perform transmission and reception between the LMF and the IAB-node using LPP signaling and/or NRPPa signaling, and as a result, the positioning of the IAB-node can be performed.

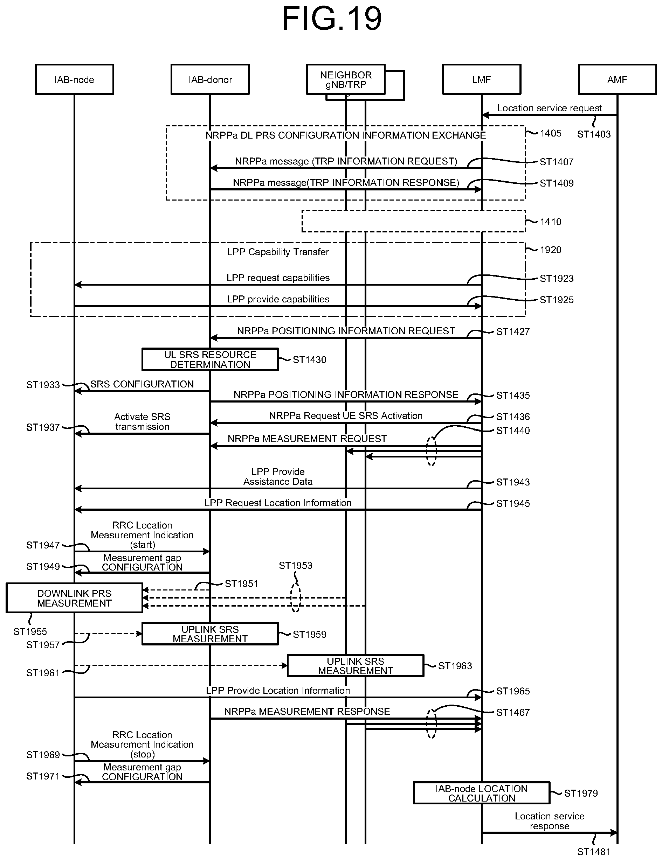

FIG. 19 is a sequence diagram illustrating an example of a positioning sequence of an IAB-node. FIG. 19 illustrates a case where multi-RTT is used as a positioning method. In FIG. 19, processes similar to those in FIG. 14 are denoted by the same numbers as those therein, and descriptions of details of the processes will be omitted.

In FIG. 19, processes with a procedure number or a step number similar to that in FIG. 14 are processes in which the serving base station is replaced with the IAB-donor in each procedure or each step in FIG. 14.

Among the processes in FIG. 19, processes with a procedure number or a step number in which a number consisting of third and fourth digits from the bottom is "19" are processes in which the serving base station is replaced with the IAB-donor and the UE is replaced with the IAB-node in processes in FIG. 14 with a procedure number or a step number in which first and second digits from the bottom are the same as those in FIG. 19.

The positioning of the UE using the IAB-node may be performed. The positioning may be performed by using, for example, transmission and reception of positioning signals between the UE and the IAB-node and between the UE and each neighbor base station. The positioning may be performed by using, for example, a method obtained by combining the first embodiment to the second modification of the first embodiment with the second embodiment.

The positioning of the IAB-node and that of the UE may be performed separately. For example, the positioning of the UE may be performed after the positioning of the IAB-node. In the above description, for example, the positioning sequence illustrated in FIG. 19 and the positioning sequence illustrated in FIG. 14 may be used in combination. Consequently, for example, it is possible to avoid complexity in a positioning process of the UE.

The positioning of the IAB-node and that of the UE may be performed simultaneously. The positioning may be performed by using, for example, transmission and reception of positioning signals between the UE and the IAB-node, between the UE and each neighbor base station, between the IAB-node and the IAB-donor DU, and between the IAB-node and each neighbor base station. The positioning method may be performed by combining the methods disclosed in the first embodiment to the second modification of the first embodiment, the second embodiment, and the third embodiment. For example, the sequences illustrated in FIGS. 14, 18, and 19 may be used in combination. Consequently, for example, it is possible to reduce latency in the positioning.

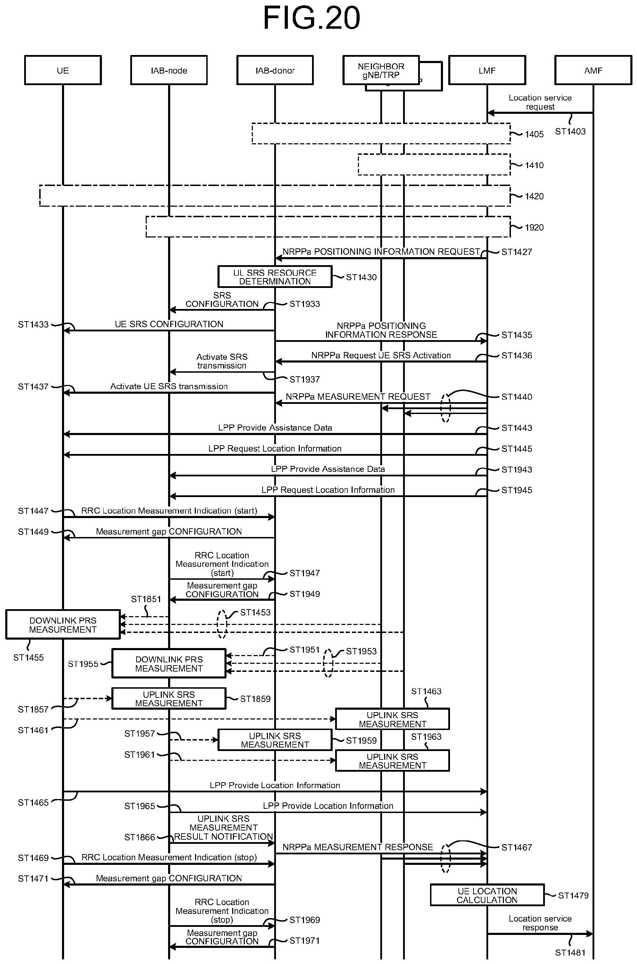

FIG. 20 is a sequence diagram illustrating an example of a positioning sequence in a case where positioning of an IAB-node and that of a UE are simultaneously performed. FIG. 20 illustrates a case where multi-RTT is used as a positioning method. In FIG. 20, processes similar to those in FIGS. 14, 18, and 19 are denoted by the same numbers as those therein, and descriptions of details of the processes will be omitted.

In FIG. 20, processes with a procedure number or a step number in which a number consisting of third and fourth digits from the bottom is "14" are similar to those in FIG. 14.

In FIG. 20, processes with a procedure number or a step number in which a number consisting of third and fourth digits from the bottom is "18" are similar to those in FIG. 18.

In FIG. 20, processes with a procedure number or a step number in which a number consisting of third and fourth digits from the bottom is "19" are similar to those in FIG. 19.

The IAB-donor may determine whether positioning of the IAB-node is necessary. For example, the CU of the IAB-donor may perform the determination. The IAB-donor may perform the determination, for example, in response to signaling of a TRP INFORMATION REQUEST from the LMF, in response to signaling of an SRS configuration request, or in response to a request for information about the location and time (see the first embodiment) from the LMF to the IAB-donor. Alternatively, the IAB-donor may perform the determination autonomously.

The determination by the IAB-node may be performed, for example, by using information about a change in the location of the IAB-node, or by using information about a positioning requirement, for example, the information of (I) disclosed as information included in the request from the LMF to the base station in the first embodiment.

The IAB-donor may notify the LMF of information about whether positioning of the IAB-node is necessary. For example, the notification may be included in TRP INFORMATION RESPONSE to the LMF and performed, or new signaling for the notification may be provided. With the use of the information, the LMF may start the positioning of the IAB-node, or need not perform the positioning of the IAB-node. By not performing the positioning of the IAB-node, for example, unnecessary IAB-node positioning no longer needs to be performed, and as a result, latency can be reduced, and the amount of signaling in the communication system can be reduced.

The IAB-node may terminate, between the IAB-node and the LMF, the LPP protocol or the NRPPa protocol. Consequently, for example, it is possible to promptly notify the LMF of information about the location of the IAB-node.

According to the third embodiment, positioning of the UE using the IAB base station can be performed.

In the first to third embodiments, the base station may notify another base station of the information about the location of the base station, the information about the time, or the information about the combination described above. For example, each of the neighbor base stations may notify the serving base station of information about the location and/or time of the neighbor base station. The serving base station may notify the LMF of the information about the serving base station and/or the information about the neighbor base stations. Consequently, for example, it is possible to reduce the amount of signaling between the base station and the LMF.

For example, the serving base station may make a request to each of the neighbor base stations for information about the location and/or time of the base station. The neighbor base stations may each notify the serving base station of information about the location and/or time of the neighbor base station in response to the request. Consequently, for example, it is possible to reduce unnecessary signaling between the base stations.

### Fourth Embodiment.

In the SL communication, communication between a UE and an NW via a relay has been proposed (see Non Patent Literatures 20 (3GPP TR23.703) and 23 (3GPP TS23.303)). The relay between the UE and the NW is sometimes referred to as a UE-to-NW relay or a UE-NW relay. In the present disclosure, a UE that performs relay between the UE and the NW is sometimes referred to as a relay-UE.

For example, there may be a case where communication needs to be performed not only between a UE within the coverage of a RAN node (for example, a gNB) and the R_AN node, but also between a more distant UE and the RAN node. In such a case, a method using the UE-NW relay is possibly employed. For example, communication between the gNB and the UE (sometimes referred to as a remote-UE) is performed via the relay-UE. In that case, communication between the gNB and the relay-UE is performed by Uu, and communication between the relay-UE and the remote-UE is performed by the PC5.

It has been studied that an adaptation layer is provided between an RLC layer and a PDCP layer in a sidelink relay (see Non Patent Literature 32 (3GPP R2-2008254)) .

However, regarding a device that should include an adaptation layer in a case where a sidelink relay is used in a base station in which the CU and the DU are separated, there is no disclosure in the standards and the like already established so far including Non Patent Literatures 1 to 33 described above. Consequently, for example, in a case where the CU and the DU are provided by vendors different from each other, inter-operability is not ensured, and thus relay using the sidelink does not operate in the above case, which is a problem.

Therefore, the present embodiment discloses a solution to the above problem.

That is, in a communication system according to the present embodiment, the CU includes an adaptation layer. The DU does not include the adaptation layer. In an F1 interface, a PDU of the adaptation layer is transmitted and received. In that case, the PDU of the adaptation layer may be an RLC SDU. Consequently, for example, it is possible to reduce the circuit scale of the DU.

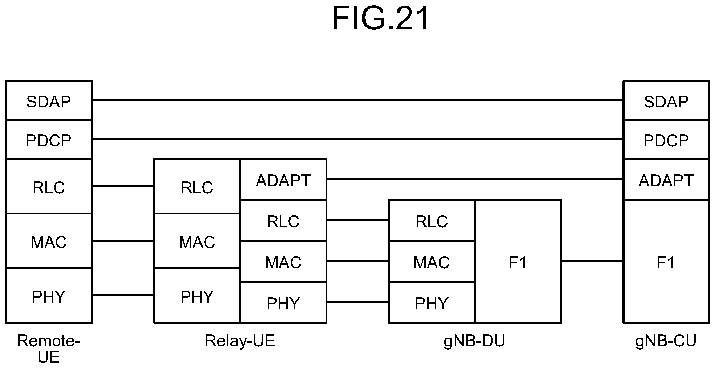

FIG. 21 is a diagram illustrating an example of a protocol stack among a remote-UE, a relay-UE, a DU of a base station (gNB-DU), and a CU of the base station (gNB-CU) in a case where the CU includes the adaptation layer. The protocol stack in FIG. 21 is illustrated for U-Plane data. The example illustrated in FIG. 21 illustrates a case where the remote-UE does not include the adaptation layer.

In FIG. 21, the adaptation (ADAPT) layer is terminated between the relay-UE and the gNB-CU. A PDCP layer is terminated between the remote-UE and the gNB-CU.

FIG. 21 illustrates a case of a U-plane, but the same may apply to a C-plane. For example, in the C-plane, a protocol stack below the PDCP layer may be similar to that in the U-plane. Consequently, for example, it is possible to avoid complexity in the communication system.

Although FIG. 21 illustrates the case where the remote-UE does not include the adaptation layer, the adaptation layer may be included therein. In that case, the adaptation layer may be terminated between the remote-UE and the relay-UE and between the relay-UE and the gNB-CU. Consequently, for example, it is possible to improve flexibility in the communication system.

Another solution will be disclosed. The DU includes the adaptation layer. The CU does not include the adaptation layer. In the F1 interface, an SDU of the adaptation layer is transmitted and received. In that case, the SDU of the adaptation layer may be a PDCP PDU. Consequently, for example, it is possible to reduce the amount of processing of the CU.

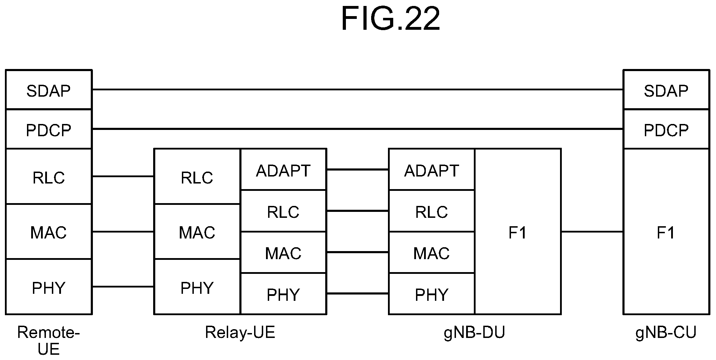

FIG. 22 is a diagram illustrating an example of a protocol stack among a remote-UE, a relay-UE, a DU of a base station (gNB-DU), and a CU of the base station (gNB-CU) in a case where the DU includes an adaptation layer. The protocol stack in FIG. 22 is illustrated for U-Plane data. The example illustrated in FIG. 22 illustrates a case where the remote-UE does not include the adaptation layer.

In FIG. 22, the adaptation layer is terminated between the relay-UE and the gNB-DU. A PDCP layer is terminated between the remote-UE and the gNB-CU.

FIG. 22 illustrates a case of the U-plane, but the same may apply to the C-plane. For example, in the C-plane, a protocol stack below the PDCP layer may be similar to that in the U-plane. Consequently, for example, it is possible to avoid complexity in the communication system.

Although FIG. 22 illustrates the case where the remote-UE does not include the adaptation layer, the adaptation layer may be included therein. In that case, the adaptation layer may be terminated between the remote-UE and the relay-UE and between the relay-UE and the gNB-DU. Consequently, for example, it is possible to improve flexibility in the communication system.

The fourth embodiment enables inter-operability in the case where the CU and the DU are provided by vendors different from each other.

### First Modification of Fourth Embodiment.

When relay using sidelink (sidelink relay) is attempted in an IAB base station, the following problem occurs. That is, since a protocol stack including a BAP and an adaptation layer of sidelink is not disclosed, sidelink relay using the IAB base station cannot be executed, which is the problem.

Therefore, a first modification of the present embodiment discloses a solution to the above problem.

That is, in a communication system according to the first modification of the present embodiment, the BAP is arranged above the adaptation layer of sidelink. The adaptation layer may be terminated between the relay-UE and the IAB-node and between the IAB-node and the IAB-donor DU. Consequently, for example, it is possible to improve flexibility in the communication system.

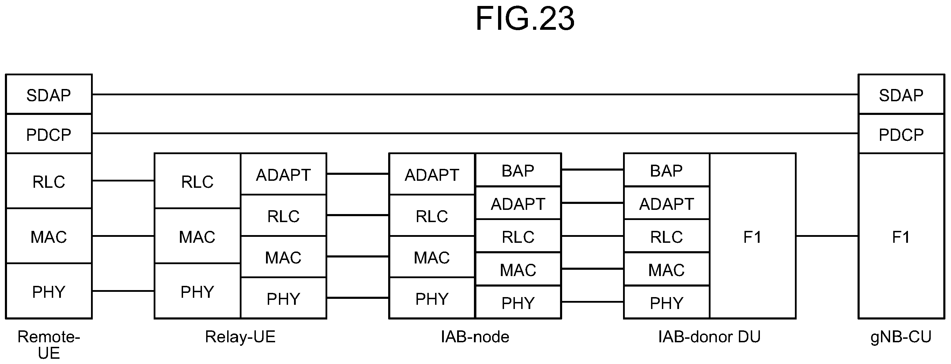

FIG. 23 is a diagram illustrating an example of a protocol stack among a remote-UE, a relay-UE, an IAB-node, an IAB-donor DU, and an IAB-donor CU (gNB-CU) in a case where the BAP is arranged above the adaptation layer. The protocol stack in FIG. 23 is illustrated for U-Plane data. The example illustrated in FIG. 23 illustrates a case where the remote-UE does not include the adaptation layer.

In FIG. 23, the adaptation layer is terminated between the relay-UE and the IAB-node and between the IAB-node and the IAB-donor DU. The BAP is terminated between the IAB-node and the IAB-donor DU.

FIG. 23 illustrates a case of the U-plane, but the same may apply to the C-plane. For example, in the C-plane, a protocol stack below the PDCP layer may be similar to that in the U-plane. Consequently, for example, it is possible to avoid complexity in the communication system.

Although FIG. 23 illustrates the case where the remote-UE does not include the adaptation layer, the adaptation layer may be included therein. In that case, the adaptation layer may be terminated between the remote-UE and the relay-UE, between the relay-UE and the IAB-node, and between the IAB-node and the IAB-donor DU. Consequently, for example, it is possible to improve flexibility in the communication system.

Although FIG. 23 illustrates a case where there is one IAB-node, a plurality of IAB-nodes may be connected. For example, a plurality of IAB-nodes may be connected in cascade. In that case, the protocol stack between the plurality of IAB-nodes may be similar to the protocol stack between the IAB-node and the IAB-donor DU. Consequently, for example, it is possible to improve flexibility in the communication system.

Another solution will be disclosed. The adaptation layer of the sidelink is arranged above the BAP. The IAB-node need not perform a protocol process of the adaptation layer. Consequently, for example, it is possible to reduce the circuit scale of the IAB-node.

In a case where the adaptation layer of the sidelink is arranged above the BAP, the IAB-donor CU may perform a process of the adaptation layer. Consequently, for example, it is possible to reduce the circuit scale of the IAB-donor DU.

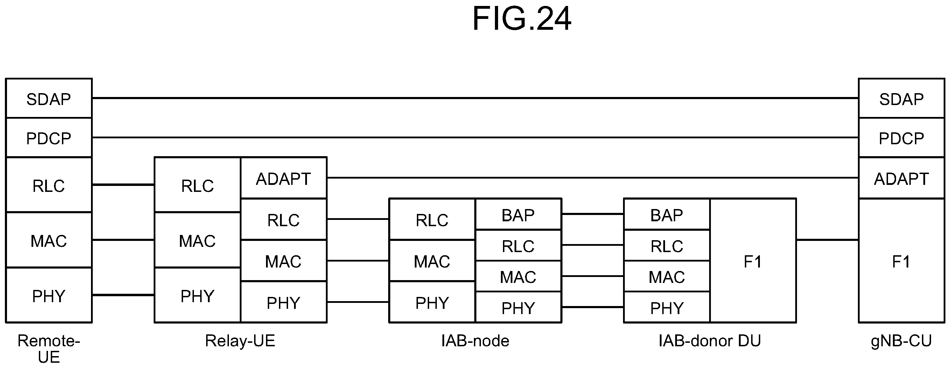

FIG. 24 is a diagram illustrating an example of a protocol stack among a remote-UE, a relay-UE, an IAB-node, an IAB-donor DU, and an IAB-donor CU (gNB-CU) in the case where the adaptation layer is arranged above the BAP. FIG. 24 illustrates a case where the IAB-donor CU includes the adaptation layer. The protocol stack in FIG. 24 is illustrated for U-Plane data. The example illustrated in FIG. 24 illustrates a case where the remote-UE does not include the adaptation layer.

In FIG. 24, the adaptation layer is terminated between the relay-UE and the IAB-donor CU. The BAP is terminated between the IAB-node and the IAB-donor DU.

FIG. 24 illustrates a case of the U-plane, but the same may apply to the C-plane. For example, in the C-plane, a protocol stack below the PDCP layer may be similar to that in the U-plane. Consequently, for example, it is possible to avoid complexity in the communication system.

Although FIG. 24 illustrates the case where the remote-UE does not include the adaptation layer, the adaptation layer may be included therein. In that case, the adaptation layer may be terminated between the remote-UE and the relay-UE, between the relay-UE and the IAB-node, and between the IAB-node and the IAB-donor DU. Consequently, for example, it is possible to improve flexibility in the communication system.

Although FIG. 24 illustrates a case where there is one IAB-node, a plurality of IAB-nodes may be connected. For example, a plurality of IAB-nodes may be connected in cascade. In that case, the protocol stack between the plurality of IAB-nodes may be similar to the protocol stack between the IAB-node and the IAB-donor DU. Consequently, for example, it is possible to improve flexibility in the communication system.

In the case where the adaptation layer of the sidelink is arranged above the BAP, the IAB-donor DU may perform a process of the adaptation layer. Consequently, for example, it is possible to reduce the amount of processing of the IAB-donor CU.

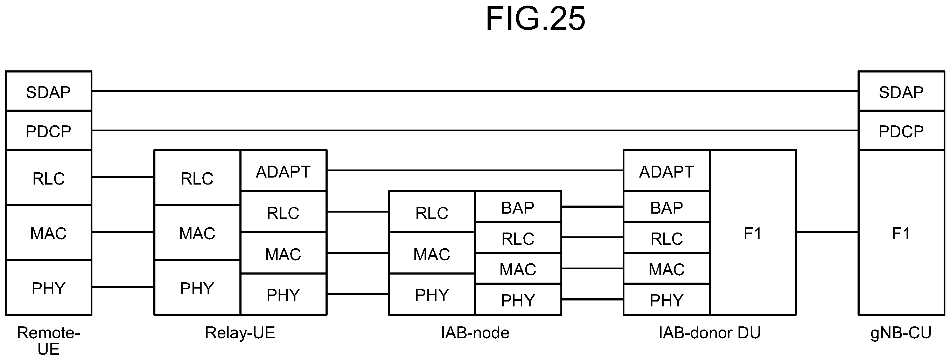

FIG. 25 is a diagram illustrating another example of the protocol stack among the remote-UE, the relay-UE, the IAB-node, the IAB-donor DU, and the IAB-donor CU (gNB-CU) in the case where the adaptation layer is arranged above the BAP. FIG. 25 illustrates a case where the IAB-donor DU includes the adaptation layer. The protocol stack in FIG. 25 is illustrated for U-Plane data. The example illustrated in FIG. 25 illustrates a case where the remote-UE does not include the adaptation layer.

In FIG. 25, the adaptation layer is terminated between the relay-UE and the IAB-donor DU. The BAP is terminated between the IAB-node and the IAB-donor DU.

FIG. 25 illustrates a case of the U-plane, but the same may apply to the C-plane. For example, in the C-plane, a protocol stack below the PDCP layer may be similar to that in the U-plane. Consequently, for example, it is possible to avoid complexity in the communication system.

Although FIG. 25 illustrates the case where the remote-UE does not include the adaptation layer, the adaptation layer may be included therein. In that case, the adaptation layer may be terminated between the remote-UE and the relay-UE, between the relay-UE and the IAB-node, and between the IAB-node and the IAB-donor DU. Consequently, for example, it is possible to improve flexibility in the communication system.

Although FIG. 25 illustrates a case where there is one IAB-node, a plurality of IAB-nodes may be connected. For example, a plurality of IAB-nodes may be connected in cascade. In that case, the protocol stack between the plurality of IAB-nodes may have a form in which the PHY, the MAC, the RLC, and the BAP terminate each other. Consequently, for example, it is possible to improve flexibility in the communication system.

Another solution will be disclosed. The adaptation layer is used between the relay-UE and the IAB-node, and the BAP is used between the IAB-nodes and between the IAB-node and the IAB-donor DU. In that case, only the IAB-node directly connected to the relay-UE may perform a process of the addition layer. Consequently, for example, the necessity of a header and/or a trailer of the adaptation layer between the IAB-nodes and between the IAB-node and the IAB-donor DU is eliminated, and as a result, it is possible to reduce the size of data transmitted and received between the IAB-nodes and between the IAB-node and the IAB-donor DU.

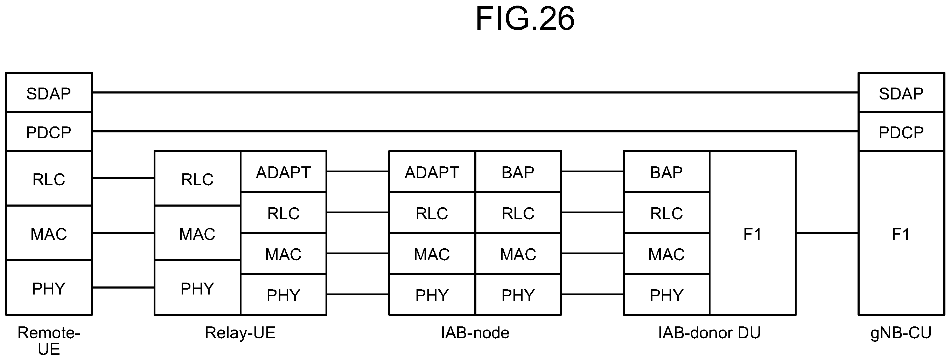

FIG. 26 is a diagram illustrating an example of a protocol stack among a remote-UE, a relay-UE, an IAB-node, an IAB-donor DU, and an IAB-donor CU (gNB-CU) in a case where the adaptation layer is used between the relay-UE and the IAB-node, and the BAP is used between the IAB-nodes and between the IAB-node and the IAB-donor DU. The protocol stack in FIG. 26 is illustrated for U-Plane data. The example illustrated in FIG. 26 illustrates a case where the remote-UE does not include the adaptation layer.

In FIG. 26, the adaptation layer is terminated between the relay-UE and the IAB-node. The BAP is terminated between the IAB-node and the IAB-donor DU. Neither the IAB-donor DU nor the IAB-donor CU includes the adaptation layer.

FIG. 26 illustrates a case of the U-plane, but the same may apply to the C-plane. For example, in the C-plane, a protocol stack below the PDCP layer may be similar to that in the U-plane. Consequently, for example, it is possible to avoid complexity in the communication system.

Although FIG. 26 illustrates the case where the remote-UE does not include the adaptation layer, the adaptation layer may be included therein. In that case, the adaptation layer may be terminated between the remote-UE and the relay-UE and between the relay-UE and the IAB-node. Consequently, for example, it is possible to improve flexibility in the communication system.

Although FIG. 26 illustrates a case where there is one IAB-node, a plurality of IAB-nodes may be connected. For example, a plurality of IAB-nodes may be connected in cascade. In that case, the protocol stack between the plurality of IAB-nodes may have a form in which the PHY, the MAC, the RLC, and the BAP terminate each other. Consequently, for example, it is possible to improve flexibility in the communication system.

According to the first modification, the relay using the sidelink can be executed in the IAB base station.

In the present disclosure, a UE in which service data is generated is a UE-TX. For example, in a case where the UE-TX is a UE 1 and a UE-RX is a UE 2, and when service data is generated in the UE 2 and data is transmitted to the UE 1, the method of the present disclosure is preferably applied by using the UE 2 as the UE-TX and the UE 1 as the UE-RX. Consequently, a similar effect can be obtained.

The above-described embodiments and modifications thereof are merely examples, and the embodiments and modifications thereof can be freely combined. In addition, any component of the embodiments and modifications thereof can be appropriately changed or omitted.

For example, in the above-described embodiments and modifications thereof, the subframe is an example of a time unit of communication in the fifth generation communication system. The subframe may be a scheduling unit. In the above-described embodiments and modifications thereof, the processes described as those performed on a per subframe basis may be performed on a per TTI basis, on a per slot basis, on a per subslot basis, or on a per minislot basis.

For example, the methods disclosed in the above-described embodiments and modifications thereof may be applied not only to a vehicle-to-everything (V2X) service but also to a service using the SL communication. For example, the methods may be applied to the SL communication used in various services such as proximity-based service, public safety, communication between wearable terminals, and device-to-device communication in a factory.

While the present disclosure has been described in detail, the above description is in all aspects illustrative and not restrictive. It is understood that numerous modifications not illustrated can be devised.

### Reference Signs List

200, 210 communication system; 202 communication terminal device (communication terminal); 203, 207, 213, 217, 223-1, 224-1, 224-2, 226-1, 226-2, 750 base station device (base station); 204 MME/S-GW unit (MME unit); 204a MME; 214 AMF/SMF/UPF unit (5GC unit); 218 central unit; 219 distributed unit; 301, 403 protocol processing unit; 302 application unit; 303, 404 transmission data buffer unit; 304, 405 encoder unit; 305, 406 modulation unit; 306, 407 frequency conversion unit; 307-1 to 307-4, 408-1 to 408-4 antenna; 308, 409 demodulation unit; 309, 410 decoder unit; 310, 411, 506, 526 control unit; 401 EPC communication unit; 402 other-base-station communication unit; 412 5GC communication unit; 501 PDN GW communication unit; 502, 522 base station communication unit; 503, 523 user plane communication unit; 504 HeNBGW communication unit; 505, 525 control plane control unit; 505-1, 525-1 NAS security unit; 505-2 SAE bearer control unit; 505-3, 525-3 idle state mobility management unit; 521 data network communication unit; 525-2 PDU session control unit; 527 session management unit; 751-1 to 751-8 beam.

## Claims

1. A communication system comprising:
a base station; and
a communication terminal connected to the base station, wherein
the base station transmits a result of reception of an uplink positioning signal transmitted by the communication terminal and location information of the base station to a positioning device that is a device having a positioning function of deriving a location of the communication terminal, and
the communication terminal transmits a result of reception of a downlink positioning signal transmitted by the base station to the positioning device.

2. The communication system according to claim 1, wherein
the base station transmits, to the positioning device, information on a time of derivation of the location information of the base station in association with the location information.

3. The communication system according to claim 1 or 2, wherein
the base station includes a central unit and one or more distributed units, and
the location information indicates a location of each of the distributed units.

4. A communication system configured to include a base station capable of supporting integrated access and backhaul, wherein
a first base station transmits a result of reception of a positioning signal transmitted by a second base station and location information of the first base station to a positioning device that is a device having a positioning function of deriving a location of the second base station, the first base station operating as a donor of the integrated access and backhaul, and the second base station operating as a node of the integrated access and backhaul, and
the second base station transmits a result of reception of a positioning signal transmitted by the first base station to the positioning device.
